# EUROPEAN PATENT SPECIFICATION

(11) **EP 1 182 410 B1**
(45) Date of publication and mention of the grant of the patent: **14.06.2006**
(21) Application number: 01117679.9
(22) Date of filing: 26.07.2001
(51) Int. Cl.: F25D 11/02, F25D 17/06, F25D 29/00

(54) **Refrigerator and method of controlling the same**
Kühlschrank und dessen Steuerungsverfahren
Réfrigérateur et procédé de commande de celui-ci

(30) Priority: 24.08.2000 JP 2000254131; 24.08.2000 JP 2000254133
(43) Date of publication of application: 27.02.2002
(73) Proprietor: KABUSHIKI KAISHA TOSHIBA, Tokyo (JP)
(72) Inventor: Sakuma, Tsutomu, Intellectual Property Division, Minato-ku, Tokyo (JP); Temmyo, Minoru, Intellectual Property Division, Minato-ku, Tokyo (JP)
(74) Representative: HOFFMANN EITLE

(56) References cited:
- EP-A- 0 593 194
- FR-A- 1 050 672
- FR-A- 2 007 714
- FR-A- 2 494 412
- US-A- 2 576 663
- US-A- 5 765 391
- PATENT ABSTRACTS OF JAPAN vol. 2000, no. 11, 3 January 2001 (2001-01-03) & JP 2000 230766 A (MATSUSHITA REFRIG CO LTD), 22 August 2000 (2000-08-22)
- PATENT ABSTRACTS OF JAPAN vol. 2000, no. 11, 3 January 2001 (2001-01-03) & JP 2000 230768 A (MATSUSHITA REFRIG CO LTD), 22 August 2000 (2000-08-22)
- PATENT ABSTRACTS OF JAPAN vol. 1999, no. 12, 29 October 1999 (1999-10-29) & JP 11 173729 A (TOSHIBA CORP), 2 July 1999 (1999-07-02)

## Description

### Detailed Description of the Invention:

This invention relates to a refrigerator provided with an evaporator and a cooling fan in each of a refrigeration chamber and freezing chambers thereof; and a method of controlling the same.

In general, a refrigerator forms a refrigerating cycle in which a refrigerant discharged from a compressor flows through a condenser, a restriction mechanism (capillary tube) and an evaporator, and then returns to the compressor. In such a refrigerator, plural chambers of different temperatures are cooled with one evaporator.

In recent years, a refrigerator which is provided with evaporators connected to a refrigeration chamber and a freezing chamber via respective capillary tubes of an arbitrary diameter, and which is adapted to alternately take a refrigeration mode for cooling the refrigeration chamber and a freezing mode for cooling the freezing chamber, by switching the connection of a refrigerant flow passage to one of these chambers to the connection thereof to the other thereof, and vice versa, and thereby alternately cool these chambers; and control evaporation temperatures in these chambers to be at levels suitable for temperature zones for these chambers by varying a rotational frequency of the compressor has been proposed (Japanese Patent Laid-Open No 173729/1999).

Namely, a flow of the refrigerant discharged from the compressor is controlled selectively so that the flow of the refrigerant advances to a refrigeration capillary tube connected to the evaporator in the refrigeration chamber via a three-way valve, or to a freezing capillary tube connected to the evaporator in the freezing chamber via the same valve.

An accumulator and a check valve are connected to an outlet of the evaporator in the freezing chamber, and a pipe provided with the accumulator and check valve meets a pipe extending from an outlet of the refrigeration chamber, the resultant pipe returning to the compressor.

In such a refrigerator as mentioned above, each chamber can be cooled at a temperature suitable for carrying out an evaporation operation therein, so that a high efficiency of a refrigerating cycle can be obtained.

Since the pressure in each evaporator during this time depends upon the temperature therein, the pressure in the evaporator (which will hereinafter be referred to as R evaporator) in the refrigeration chamber becomes higher than that in the evaporator (which will hereinafter be referred to as F evaporator) in the freezing chamber.

Therefore, in the refrigerator proposed in the above publication, the check valve is provided in the pipe on the side of the outlet of the freezing chamber, and, in a freezing mode, the check valve is closed by utilizing a difference between the pressure in the freezing chamber and that in the refrigeration chamber, a low-temperature refrigerant being thereby stored in the F evaporator. Accordingly, when the connection of the refrigerant flow passage is switched to the connection thereof to the freezing chamber, the stored refrigerant is circulated, so that an efficient cooling operation can be carried out.

However, when the compressor is stopped, a high-temperature refrigerant in a condenser flows into the evaporator communicating with the check valve, and the temperature in the evaporator necessarily increases. Namely, when the compressor is stopped in a freezing mode, the high-temperature refrigerant in the condenser flows into the R evaporator via a change-over valve, and the temperature in the F evaporator increases. When the compressor is stopped in a refrigeration mode, the temperature in the R evaporator increases. Consequently, the balance between the temperature, pressure and amount of refrigerant in the F evaporator and those in the R evaporator comes to be lost, so that a refrigerant the amount of which is larger than that thereof in the R evaporator during a chamber cooling operation comes to reside therein.

After the defrosting of the F evaporator, a still larger amount of refrigerant flows toward the F evaporator and resides therein.

When the compressor in this condition is started in a refrigeration mode, the refrigerant in the R evaporator is not evaporated, and a liquid back flow, i.e., a back flow of refrigerant in a liquid state to the compressor occurs. This causes not only a more than necessary input increase but also a failure of the compressor.

In the structure of the refrigerating cycle in which the evaporators are parallel-connected in the above-described refrigerator, a refrigerant is made to flow selectively to one of the two evaporators, so that the cooling of the refrigeration chamber and freezing chamber can be done alternately only.

Therefore, when the refrigeration chamber and freezing chamber are not cooled, for example, at the time of energization of a power source, it is not possible to cool both of these chambers speedily.

Moreover, when the interior of these chambers is not in a cooled condition, a load is large. Therefore, unless the cooling capacity is controlled, a refrigerant circulation rate increases, and a condensation temperature becomes high. This causes a load to be imparted to the refrigerating cycle.

Further, JP 2000 230766A discloses a refrigerator comprising control means for operating a fan of an evaporator.

The present invention has been made in view of the above-mentioned circumstances, and provides a refrigerator adapted to cool a refrigeration chamber and freezing chambers efficiently with a proper amount of refrigerant as the balance between the refrigerant residing an R evaporator and that residing in an F evaporator is maintained.

The present invention further provides a refrigerator capable of cooling a refrigeration chamber and freezing chambers alternately and suitably by controlling the cooling capacity of the refrigerator so that an excessive load is not imparted to a refrigerating cycle at the time of energization of a power source.

According to the invention as set forth in Claim 1, is provided a refrigerator having a refrigerating cycle including a compressor, a condenser and a change-over valve which are connected in order, and an evaporator in a refrigeration chamber and an evaporator in freezing chambers which are parallel-connected to the change-over valve via respective restriction mechanisms, the evaporators being provided therein with a fan for cooling a refrigeration chamber and a fan for cooling freezing chambers which are adapted to circulate cold air in the respective chambers, the refrigerator being capable of alternately taking a refrigeration mode for cooling the refrigeration chamber and a freezing mode for cooling the freezing chambers, by switching the connection of a refrigerant flow passage to the evaporator in the refrigeration chamber and the connection thereof to the evaporator in the freezing chambers from one to the other alternately, characterized in that a controller of the refrigerator is adapted to carry out a freezing mode starting operation for starting the refrigerator from a freezing mode (I) after a difference between a temperature in the refrigeration chamber and that in the freezing chambers decreases to a level lower than a set level to cause the compressor to be stopped, or (II) after a defrosting operation is carried out, or (III) at the time of energization of a power source.

According to the invention as set forth in Claim 2, is provided the refrigerator of Claim 1, characterized in that the controller is adapted to switch the freezing mode to a refrigeration mode when the compressor is started in accordance with a demand for a refrigeration mode cooling operation, after the chamber cooling Operation is carried out for a predetermined period of time by a freezing mode starting Operation.

According to the invention as set forth in Claim 3, is provided the refrigerator of Claim 2, characterized in that the controller is adapted to set the time during which the freezing mode chamber cooling operation is carried out to such a level that decreases in inverse proportion to a rotational frequency of the compressor.

According to the invention as set forth in Claim 4, is provided the refrigerator of Claim 1, characterized in that the controller is adapted to operate the cooling fan in the refrigeration chamber for a predetermined period of time during a freezing mode starting Operation when the compressor is started in accordance with a demand for a refrigeration mode cooling Operation.

According to the invention as set forth in Claim 5, is provided the refrigerator of Claim 4, characterized in that the controller is adapted to set the time during which the cooling fan in the refrigeration chamber is operated synchronous with that during which a freezing mode starting operation is carried out.

According to the invention as set forth in Claim 6, is provided the refrigerator of Claim 4, characterized in that the controller is adapted to stop the Operation of the cooling fan in the refrigeration chamber when a temperature detected by a sensor for detecting a temperature in the evaporator in the refrigeration chamber increases to a predetermined level.

According to the invention as set forth in Claim 7, is provided a method of controlling a refrigerator having a refrigerating cycle including a compressor, a condenser and a change-over valve which are connected in order, an evaporator in a refrigeration chamber and an evaporator in freezing chambers which are parallel-connected to the change-over valve via respective restriction mechanisms, and a fan for cooling the refrigeration chamber and a fan for cooling the freezing chambers which are provided in these evaporators and adapted to circulate cold air in the respective chambers, the refrigerator being capable of alternately taking a refrigeration mode for cooling the refrigeration chamber and a freezing mode for cooling the freezing chambers, by switching the connection of a refrigerant flow passage to the evaporator in the refrigeration chamber and the connection thereof to the evaporator in the freezing chambers from one to the other alternately, characterized in that the method includes the step of carrying out a freezing mode starting operation for starting the refrigerator from a freezing mode (I) after a difference between a temperature in the refrigeration chamber and that in the freezing chambers decreases to a level lower than a set level to cause the compressor to be stopped, or (II) after a defrosting operation is carried out, or (III) at the time of energization of a power source.

According to the invention as set forth in Claim 8, is provided the method of controlling a refrigerator of Claim 7, characterized in that the freezing mode is switched to a refrigeration mode when the compressor is started in accordance with a demand for a refrigeration mode cooling operation, after the chamber cooling operation is carried out for a predetermined period of time by a freezing mode starting operation.

According to the invention as set forth in Claim 9, is provided the method of controlling a refrigerator of Claim 8, characterized in that the time during which the freezing mode chamber cooling operation is carried out is set to such a level that decreases in inverse proportion to a rotational frequency of the compressor.

According to the invention as set forth in Claim 10, is provided the method of controlling a refrigerator of any one of claims 7 to 9, characterized in that the cooling fan in the refrigeration chamber is operated for a predetermined period of time during a freezing mode starting operation when the compressor is started in accordance with a demand for a freezing mode cooling operation.

According to the invention as set forth in Claim 11, is provided the method of controlling a refrigerator of Claim 10, characterized in that the time during which the cooling fan in the refrigeration chamber is operated is set synchronous with that during which a freezing mode starting operation is carried out.

According to the invention as set forth in Claim 12, is provided the method of controlling a refrigerator of Claim 10 or 11, characterized in that the operation of the cooling fan in the refrigeration chamber is stopped when a temperature detected by a sensor adapted to detect the temperature in the evaporator in the refrigeration chamber increases to a predetermined level.

According to the invention as set forth in Claim 13, is provided the refrigerator according to claim 1, wherein the controller of the refrigerator is adapted to carry out a freezing mode cooling operation at the time of energization of a power source, and thereafter switch the freezing mode and a refrigeration mode from one to the other alternately every time the temperatures in the freezing chambers and refrigeration chamber decrease by predetermined levels, and the control operation in this case is carried out from a non-cooling condition which is finished with the temperature in the refrigeration chamber higher than that in the freezing chambers.

According to the invention as set forth in Claim 14, is provided the refrigerator the controller of the refrigerator is adapted to carry out a freezing mode cooling operation at the time of energization of a power source, and thereafter switch the freezing mode and a refrigeration mode from one to the other alternately every time a predetermined period of time elapses, and the control operation in this case is carried out from a non-cooling condition which is finished with the temperature in the refrigeration chamber higher than that in the freezing chamber.

According to the invention as set forth in Claim 15, is provided the refrigerator of Claim 13 and Claim 14, characterized in that the controller is adapted to rotate when the fan for cooling the refrigeration chamber and the fan for cooling the freezing chambers are provided, the fan for cooling the refrigeration chamber or the fan for cooling the freezing chambers with a low rotational frequency when a difference between an actual temperature in the refrigeration chamber and a final target temperature therein is large, or when a difference between an actual temperature in the freezing chambers and a final target temperature therein is large.

According to the invention as set forth in Claim 16, is provided the refrigerator of any one of claims 13 to 15, characterized in that the controller is adapted to rotate, when condenser radiation fans are provided, the condenser radiation fans with an increased rotational frequency or a maximum rotational frequency when a difference between an actual temperature in the refrigeration chamber and a final target temperature therein is large, or when a difference between an actual temperature in the freezing chambers and a final target temperature therein is large.

According to the invention as set forth in Claim 17, is provided the refrigerator of any one of claims 13 to 17, characterized in that, when the capacity of the compressor can be varied, the controller is adapted to reduce the capacity of the compressor when a difference between an actual temperature in the refrigeration chamber and a maximum target temperature therein is large, or when a difference between an actual temperature in the freezing chambers and a maximum target temperature therein is large.

According to the invention as set forth in Claim 18, is provided the refrigerator of any one of claims 13 to 17, characterized in that the controller is adapted to switch at a point in time at which the temperature in the refrigeration chamber or that in the freezing chambers becomes not higher than a predetermined level, the control Operation carried out from a non-cooling condition to regular alternate control operations.

According to the invention as set forth in Claim 19, is provided the refrigerator of any one of claims 13 to 18, characterized in that the controller is adapted not to carry out when the temperature in the refrigeration chamber or the temperature in the freezing chambers is lower than a predetermined level, or when the temperature of the outside air is lower than a predetermined level, the control operation to be executed from the non-cooling condition.

According to the invention as set forth in Claim 20, is provided the refrigerator of any one of claims 13 to 19, characterized in that the Controller is adapted not to carry out an ice making operation, a defrosting operation and a rapid cooling operation during the control operation executed from the non-cooling condition, but to carry out the same operations after the control operation executed from the non-cooling condition is switched to the regular alternate cooling operations.

According to the invention as set forth in Claim 21, is provided the refrigerator of any one of claims 1 to 6 or 13 to 20, characterized in that a refrigerant used for the refrigerating cycle is an inflammable refrigerant.

According to the invention as set forth in Claim 22, is provided the method of controlling a refrigerator according to claim 7, wherein the method comprises the steps of carrying out a freezing mode cooling Operation at the time of energization of a power source, and thereafter switching the freezing mode and a refrigeration mode from one to the other alternately every time the temperatures in the freezing chambers and refrigeration chamber decrease by predetermined levels, a control operation in this case being carried out from a non-cooling condition which is finished with the temperature in the refrigeration chamber higher than that in the freezing chambers.

According to the Invention as set forth in Claim 23, is provided the method of controlling a refrigerator according to claim 7, wherein the method comprises the steps of carrying out a freezing mode cooling Operation at the time of energization of a power source, and thereafter switching the freezing mode and refrigeration mode from one to the other alternately every time a predetermined period of time elapses, the control Operation in this case being carried out from a non-cooling condition which is finished with the temperature in the refrigeration chamber higher than that in the freezing chambers.

According to the Invention as set forth in Claim 24, is provided the method of controlling a refrigerator of Claim 22 and Claim 23, characterized in that, when a fan for cooling the refrigeration chamber and a fan for cooling the freezing chambers are provided, the fan for cooling the refrigeration chamber or the fan for cooling the freezing chambers is rotated with a low rotational frequency when a difference between an actual temperature in the refrigeration chamber and a final target temperature therein is large, or when a difference between an actual temperature in the freezing chambers and a final target temperature therein is large.

According to the invention as set forth in Claim 25, is provided the method of controlling a refrigerator of any one of claims 22 to 24, characterized in that, when condenser radiation fans are provided, the condenser radiation fans are rotated with an increased rotational frequency or a maximum rotational frequency when a difference between an actual temperature in the refrigeration chamber and a final target temperature therein is large, or when a difference between an actual temperature in the freezing chambers and a final target temperature therein is large.

According to the invention as set forth in Claim 26, is provided the method of controlling a refrigerator of any one of claims 22 to 25, characterized in that, when the capacity of the compressor can be varied, the capacity of the compressor is reduced when a difference between an actual temperature in the refrigeration chamber and a maximum target temperature therein is large, or when a difference between an actual temperature in the freezing chambers and a maximum target temperature therein is large.

According to the invention as set forth in Claim 27, is provided the method of controlling a refrigerator of any one of claims 22 to 26, characterized in that the control operation carried out from a non-cooling condition is switched to regular alternate control operations at a point in time at which the temperature in the refrigeration chamber or that in the freezing chambers becomes not higher than a predetermined level.

According to the invention as set forth in Claim 28, is provided the method of controlling a refrigerator of any one of claims 22 to 27, characterized in that the control operation to be executed from the non-cooling condition is not carried out when the temperature in the refrigeration chamber or the temperature in the freezing chambers is lower than a predetermined level, or when the temperature of the outside air is lower than a predetermined level.

According to the invention as set forth in Claim 29, is provided the method of controlling a refrigerator of any one of claims 22 to 28, characterized in that an ice making operation, a defrosting operation and a rapid cooling operation are not carried out during the control operation executed from the non-cooling condition but carried out after the control operation executed from the non-cooling condition is switched to the regular alternate cooling operations.

According to the invention as set forth in Claim 30, is provided the method of controlling a refrigerator of any on e of claims 7 to 12 or 22 to 29, characterized in that the refrigerant used for the refrigerating cycle is an inflammable refrigerant.

The inventions as set forth in Claim 1 and Claim 7 can prevent the refrigerant residing in the evaporator in the refrigeration chamber from returning in a liquid state to the compressor, and enable an efficient cooling operation to be carried out with a proper amount of refrigerant, and a useless increase in input to be held down.

The inventions as set forth in Claim 2 and Claim 8 enable a predetermined amount of refrigerant to be stored in the evaporator in the freezing chambers, and a balance between the amount of refrigerant in the evaporator in the refrigeration chamber and that of refrigerant in the evaporator in the freezing chambers to be maintained substantially properly, so that a later cooling operation of a refrigeration mode can be carried out efficiently.

The inventions as set forth in Claim 3 and Claim 9 enable a control operation to be carried out easily, and a balance between the amount of refrigerant in the evaporator in the refrigeration chamber and that of refrigerant in the evaporator in the freezing chambers to be maintained properly irrespective of the rotational frequency of the compressor.

The inventions as set forth in Claim 4 and Claim 10 enable a more than necessary amount of refrigerant residing in the evaporator in the refrigeration chamber be transferred rapidly to the freezing chambers, so that the time for transferring a cooling operation of a freezing mode to a demanded cooling operation of a refrigeration mode can be reduced.

The inventions as set forth in Claim 5 and Claim 11 enable a balance of the amounts of refrigerant to be maintained by a simple control operation, and the time for transferring a cooling operation of a freezing mode to a demanded cooling operation of a refrigeration mode to be reduced by a simple control operation.

The inventions as set forth in Claim 6 and Claim 12 can prevent an input increase ascribed to an excessive operation of the cooling fan in the refrigeration chamber, and reduce by a simple control operation just as Claim 5 and Claim 12 the time for transferring a cooling operation of a freezing mode to a demanded cooling operation of a refrigeration mode.

The inventions as set forth in Claim 21 and Claim 30 enable the amount of refrigerant used in each of the above inventions to be reduced to a low level, so that an inflammable refrigerant may be used safely.

The inventions as set forth in Claim 13 to Claim 30 enable both the refrigeration chamber and freezing chambers to be cooled rapidly by setting a target temperature in a stepped manner, or by reducing this temperature every time a predetermined period of time elapses.

Preferred embodiments of the prevent Invention will be described in detail with reference to the following figures, wherein:
Fig. 1 is a sectional view of a refrigerator showing a first embodiment of the present invention;
Fig. 2 is a refrigerating cycle of the same refrigerator;
Fig. 3 is a time chart showing the condition of temperature variation occurring during an ideal operation of the refrigerator;
Fig. 4 is a time chart showing the condition of temperature variations occurring in an R evaporator and an F evaporator during a defrosting operation;
Fig. 5 is a time chart showing the condition of a suction temperature variation occurring in a compressor during a defrosting operation;
Fig. 6 is a time chart showing the condition of variations of various temperatures occurring when the cooling operation of a F mode is stopped;
Fig. 7 is a time chart showing the condition of variations of various temperatures occurring when the cooling operation of a R mode is stopped;
Fig. 8 illustrates temperature variations occurring during a cooling operation in which the cooling of a freezing temperature zone 40 and that of a refrigeration temperature zone 30 are done in a stepped manner in a second embodiment;
Fig. 9 illustrates temperature variations occurring during a cooling operation in which the cooling of the freezing temperature zone 40 and that of the refrigeration temperature zone 30 are done for predetermined periods of time alternately in a third embodiment;
Fig. 10 illustrates a control operation in which a rotational frequency of a fan for cooling the interior of the refrigeration chamber and freezing chambers is varied in accordance with the temperatures therein; and
Fig. 11 illustrates the condition of the switching of an alternate cooling operation to a regular control operation in the method according to the present invention.

### <First embodiment>

A first embodiment of the present invention will now be described in detail with reference to the drawings.

### (1) Construction of the refrigerator:

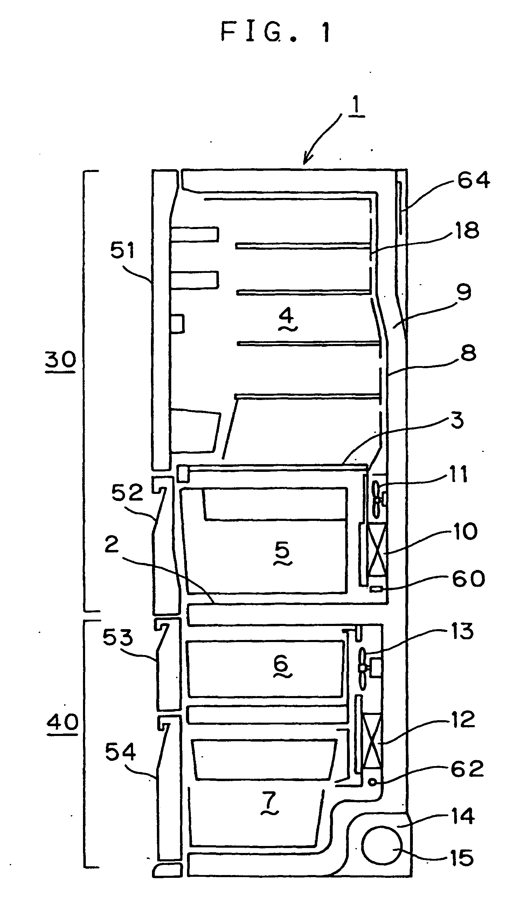

Fig. 1 is a sectional view of an indirect cooling type refrigerator showing a first embodiment.

A refrigerator body 1 is formed of an insulating case 9 and an inner case 8. The refrigerator body is divided into a refrigeration temperature zone 30 and a freezing temperature zone 40 by an insulating partition wall 2. The refrigeration chamber 30 and freezing chamber 40 are formed so that the cold air in the former chamber and that in the latter chamber are completely independent of each other, and not mixed with each other.

The interior of the chamber of the refrigeration temperature zone 30 is divided into a refrigeration chamber 4 and a vegetable chamber 5 by a refrigeration partition plate 3, while the interior of the freezing chamber of the freezing temperature zone 40 is formed of first and second freezing chambers 6, 7, all of these chambers having opening and closing doors 51-54.

An evaporator (which will hereinafter be referred to as an R evaporator) 10 in the refrigeration chamber and a fan (which will hereinafter be referred to as a R fan) 11 in the refrigeration chamber are provided on a rear surface of the vegetable chamber 5, and the R fan 11 is operated arbitrarily in accordance with variation of a temperature in the refrigeration chamber and the opening and closing of the doors. The rear surface of the refrigeration chamber 4 constitutes a cold air circulating passage 18 for supplying cold air into the refrigeration temperature zone 30.

An evaporator (which will hereinafter be referred to as an F evaporator) 12 in the freezing chambers and a fan (which will hereinafter be referred to as a F fan) 13 in the freezing chambers are provided on rear walls of the first and second freezing chambers 6, 7, and cold air is circulated to cool these freezing chambers 6, 7.

Defrosting heaters 60, 62 are provided below the R evaporator 10 and F evaporator 12.

A controller 64 adapted to control this refrigerator and formed of a microcomputer is provided on an upper portion of the rear surface of the refrigerator body 1.

### (2) Construction of a refrigerating cycle:

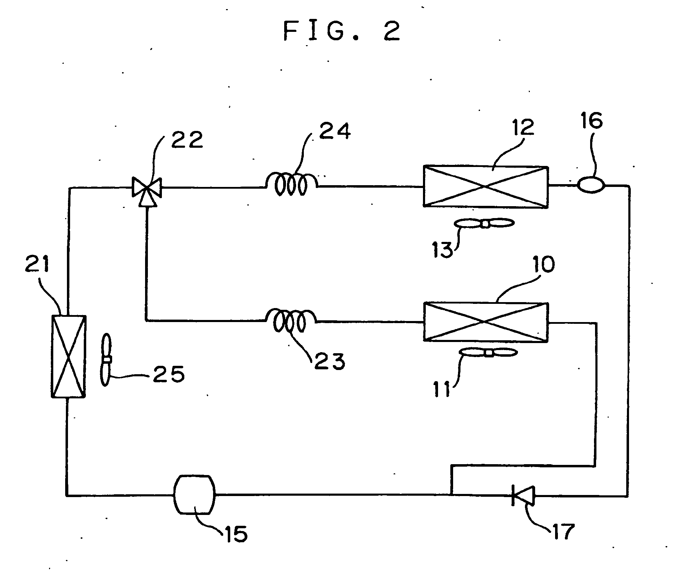

Fig. 2 shows a refrigerating cycle in which a cooling operation of a refrigeration mode and that of a freezing mode are alternately carried out.

A machine room 14 at a lower portion of the rear wall of the refrigerator body 1 is provided therein with a compressor 15 and a condenser 21.

A noninflammable refrigerant discharged from the compressor 15 flows through the condenser 21, and then refrigerant flow passages are switched from one to the other alternately by a refrigerant flow change-over mechanism formed of a three-way valve 22.

A refrigeration capillary tube 23 and R evaporator 10 are connected in order to one outlet of the three-way valve 22, while a freezing capillary tube 24, F evaporator 12 and an accumulator 16 are connected in order to the other outlet of the three-way valve 22.

A check valve 17 is connected in the machine room 14 to an outlet pipe of the accumulator 16. An outlet side portion of the check valve 17 meets an outlet pipe of the R evaporator 10, and is connected to a suction side portion of the compressor 15.

According to the refrigerator 1 of such a construction, the refrigerant flow passages are switched from one to the other by the three-way valve 22. During a freezing mode cooling operation, the refrigerant is depressurized in the freezing capillary tube 24, and the resultant refrigerant enters the F evaporator 12 and cools the freezing temperature zone 40, the resultant refrigerant returning to the compressor 15. During a refrigeration mode cooling operation, a refrigerating cycle is formed, in which the refrigerant is depressed in the refrigeration capillary tube 23, the resultant refrigerant entering the R evaporator 10 and cooling the refrigeration temperature zone 30, the resultant refrigerant returning to the compressor 15.

Namely, during the freezing mode cooling operation, the refrigerant flows to the freezing capillary tube 24, F evaporator 12, accumulator 16 and check valve 17 in the mentioned order, and the cold air is circulated in the freezing chambers by an operation of the F fan 13, the cooling of the first and second freezing chambers 6, 7 being thereby done. When the three-way valve 22 is then shifted to cause the refrigerant flow passage to be switched from the freezing mode to the refrigeration mode, the refrigerant flows to the R evaporator 10 to cool the refrigeration chamber 4 and vegetable chamber 5 by an operation of the R fan 11.

### (3) Behavior of the refrigerant:

The behavior of the refrigerant will now be described.

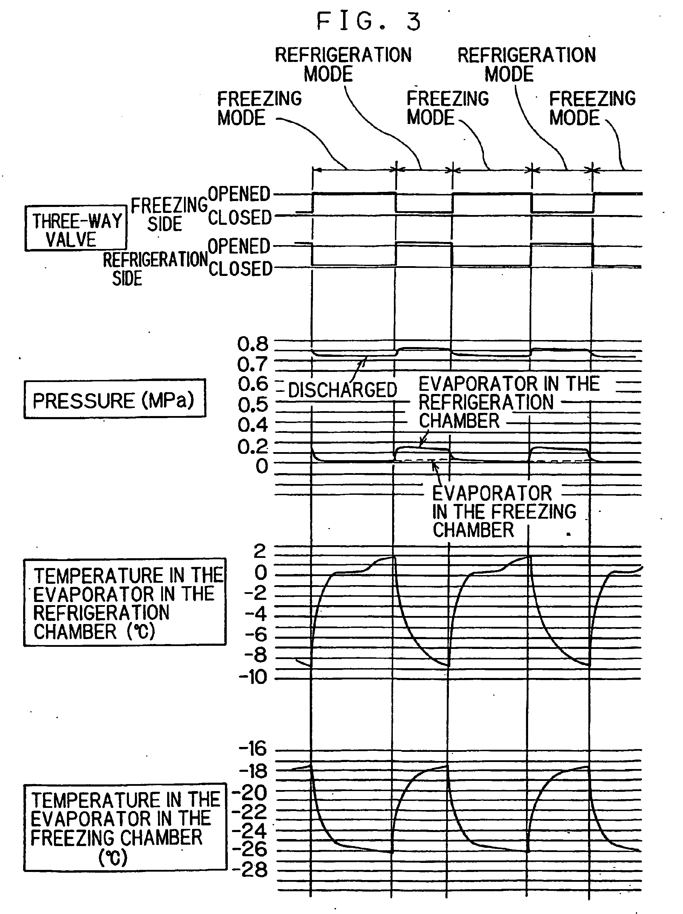

During a refrigeration mode in the refrigerating cycle of Fig. 2, the pressure and temperature in the R evaporator 10 are about 0.2 MPa and -10°C, and those in the F evaporator 12 about 0.1 MPa and -26°C. The condition of the pressures and ideal temperature variations in the R evaporator 10 and F evaporator 12 during an alternate cooling operation is shown in Fig. 3.

Namely, in a refrigeration mode, the pressure in the R evaporator 10 is higher than that in the F evaporator 12. Owing to this pressure difference, the check valve 17 is closed, and a low-temperature refrigerant is stored in the F evaporator 12.

When the refrigeration mode is then switched to a freezing mode, a cooling operation can be carried out by using this low-temperature refrigerant, i.e., an efficient freezing mode cooling operation can be carried out without causing a refrigerant delay to occur.

Thus, in a regular case, the cooling operations are carried out repeatedly as the above-mentioned temperature and pressure balance is maintained even when load variation occurs due to the insertion of food and the opening and closing of the doors.

### (4) Condition of the temperature during a defrosting operation:

The temperature condition in a defrosting operation in which the frost formed in the R evaporator 10 and F evaporator 12 is melted by the defrosting heaters 60, 62 will now be described.

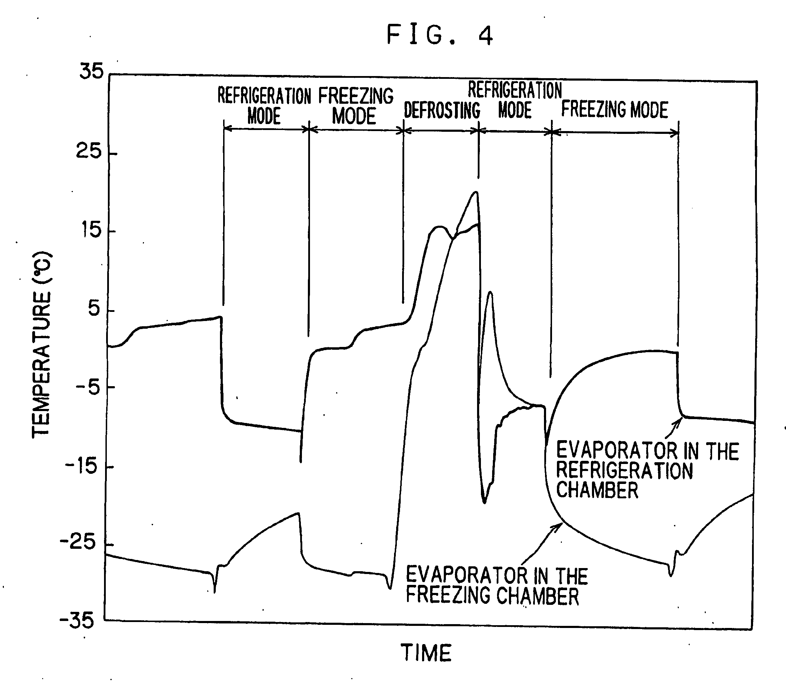

Fig. 4 shows the variations of the temperatures in the R evaporator 10 and F evaporator 12 recorded before and after the defrosting of these evaporators is done.

Usually, the defrosting of evaporators finishes when the temperatures therein detected attain predetermined levels. However, since the temperature in the R evaporator 10 is higher than that in the F evaporator 12 with moreover a moistening defrosting operation in which the frost is melted by operating the R fan 11 during a freezing mode conducted, the defrosting of the R evaporator 10 finishes earlier. Accordingly, the temperature in the F evaporator 12 becomes locally higher.

As shown in Fig. 4, a peak of the temperature in the F evaporator 12 is higher than that of the temperature in the R evaporator 10 by around 5°C. In this temperature condition, the pressure in the F evaporator 12 becomes higher than that in the R evaporator 10, and the refrigerant in the F evaporator 12 flows into the R evaporator 10, so that the refrigerant comes to reside in the R evaporator 10 more than usual.

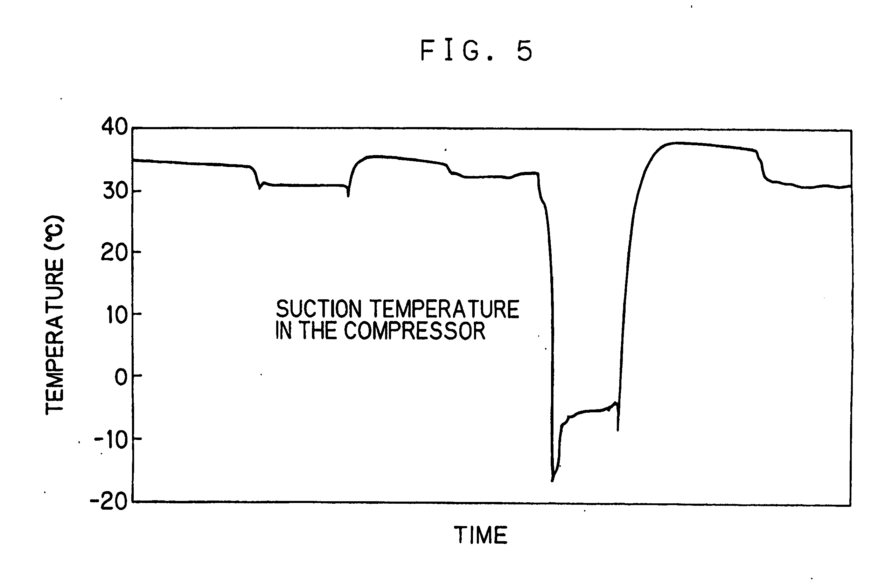

When the compressor 15 is started in a refrigeration mode from such a condition in which a large amount of refrigerant resides in the R evaporator 10, the temperature in a suction portion of the compressor 15 decreases as shown in Fig. 5. Namely, the refrigerant cannot be completely evaporated in the R evaporator 10, and the refrigerant not evaporated returns in the form of a liquid refrigerant to the compressor 15. This not only causes an input increase to occur but also constitutes a large cause of a failure of the compressor 15.

### (5) Time of stoppage of the compressor 15:

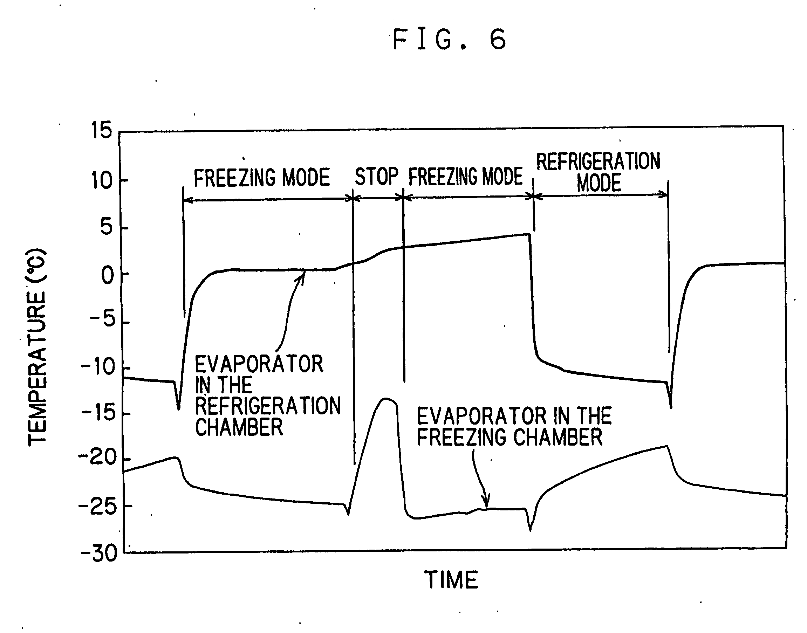

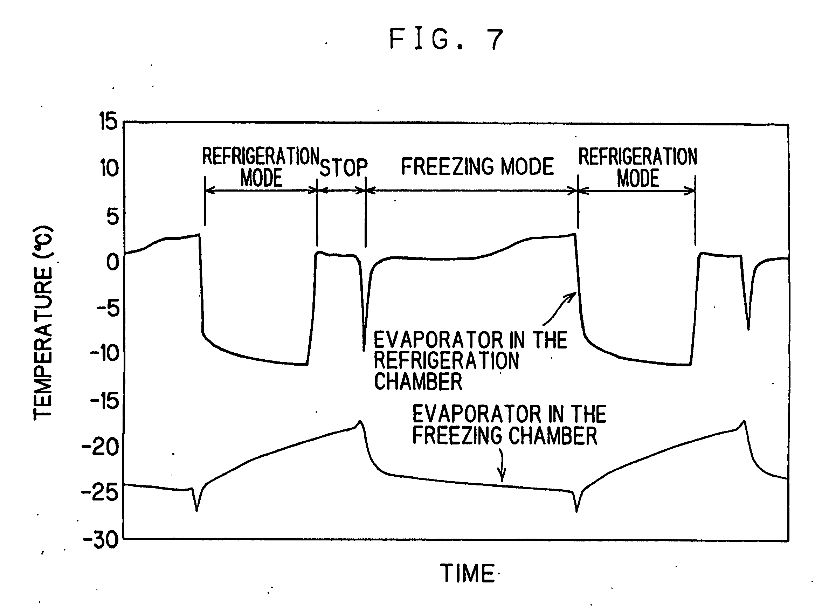

Figs. 6 and 7 show variations of the temperatures in the evaporators during the time between the starting of a freezing mode and a refrigeration mode and the stoppage of the compressor 15.

When the compressor is stopped, the temperature in the evaporator which was theretofore on the cooling side always increases because of the high-temperature refrigerant flowing thereinto.

Therefore, in order to minimize the influence of this temperature rise, it is recommended that the stopping of the compressor be done in a refrigeration mode.

### (6) Control method in a first embodiment:

The control method practiced by the controller 64 in a first embodiment is started from a freezing mode after a defrosting operation is carried out, or when the compressor 15 is restarted on the basis of a judgment that a temperature rise occurs in the refrigeration chamber and freezing chambers, irrespective of whether a demand is made by the refrigeration side or by the freezing side.

As shown in Figs. 4 and 5, when the temperature in the R evaporator 10 and that in the F evaporator 12 are reversed or when a difference between these temperatures becomes small, the balance between the amount of refrigerant in the R evaporator 10 and that thereof in the F evaporator 12 comes to be lost as well as when the compressor 15 is stooped.

In both the cases of Figs. 6 and 7, the compressor 15 is started in a freezing mode. However, when the compressor 15 is started in a refrigeration mode in the condition in which a difference between the temperature in the R evaporator 10 and that in the F evaporator 12 is small with a large amount of refrigerant residing in the R evaporator 10 as shown in Fig. 5, the refrigerant cannot be completely evaporated, and the refrigerant not evaporated returns in a liquid state to the compressor 15.

Therefore, even when the compressor 15 is restarted in accordance with a demand for a cooling operation made when the temperature in the chamber of a refrigeration temperature zone 30 increases after the interior of the refrigeration chamber and freezing chambers is cooled to a set temperature to cause the compressor 15 to be stopped, the controller 64 switches the three-way valve 22 to the freezing side flow passage, and operates the compressor in a freezing mode. This operation in a freezing mode will hereinafter be referred to as a freezing mode starting operation.

This freezing mode starting operation is carried out for the purpose of maintaining the balance between the amount of refrigerant in the R evaporator 10 and that thereof in the F evaporator 12. Therefore, this operation is carried out for an arbitrary period of time only, and a cooling operation of the demanded refrigeration mode is thereafter carried out.

### (7) Control method in a second embodiment:

The control method in a second embodiment will now be described.

The freezing mode starting operation is carried out so as to maintain the balance of the amounts of refrigerants in the evaporators. The length of time required to attain a steady state of the compressor 15 decreases in inverse proportion to the rotational frequency of the compressor. Although the refrigeration temperature zone 30 which made a demand requires to be cooled immediately, it is necessary that a switching operation be carried out after a predetermined amount of refrigerant is stored in the F evaporator. When the rotational frequency of the compressor 15 is set high at the time of starting the same, so as to reduce the steady state restoration time, noise increases.

Therefore, the rotational frequency of the compressor 15 is determined by a regular control operation, and the time for switching the actual mode to the demanded R mode is determined in accordance with this rotational frequency of the compressor 15.

For example, when a cooling instruction from the refrigeration temperature zone 30 is 30 Hz, a 3-minute freezing mode cooling operation is carried out at 30 Hz, and when the cooling instruction is 50 Hz, the freezing mode cooling operation is carried out for 2 minutes, the refrigerator being thereafter carried out by a regular control operation.

### (8) Control method in a third embodiment:

The control method in a third embodiment will now be described.

In order to carry out a freezing mode starting operation in this embodiment, the discharging of a refrigerant residing in an R evaporator 10 can be hastened by operating a R fan 11 for an arbitrary period of time, so that the time for which the refrigerant is stored in an F evaporator 12 can be reduced.

During this time, the R fan 11 is operated with a predetermined rotational frequency. After the completed freezing mode cooling operation is transferred to a refrigeration mode cooling operation, a control operation with a regular rotational frequency according to a control instruction corresponding to, for example, the rotational frequency of a compressor 15 is carried out.

### (9) Control method in a fourth embodiment:

The control method in a fourth embodiment will now be described.

In order to carry out a freezing mode starting operation in this embodiment, the operation of a R fan 11 is determined in accordance with the temperature in an R evaporator 10.

When a freezing mode operation is carried out with a large amount of refrigerant residing in the R evaporator 10, the pressure in the R evaporator 10 decreases to cause the refrigerant to evaporate. During this time, the temperature in the R evaporator 10 decreases due to the evaporation of the refrigerant. Therefore, when the R fan 11 is operated, the discharging of the refrigerant residing in the R evaporator 10 can be hastened, and, moreover, this can contribute to the cooling of a refrigeration temperature zone 30.

However, when the temperature in the R evaporator 10 becomes around -2°, the operation of the R fan 11 does not contribute to the cooling of the refrigeration temperature zone 30 but rather constitutes a load to the interior of a refrigeration chamber due to an input from the R fan 11.

Therefore, the attainment of the temperature in the R evaporator 10 of, for example, -3° is utilized as a sign of the starting of the evaporation of the refrigerant, and the operation of the R fan 11 is stopped.

### (10) Control method in a fifth embodiment:

The control method in a fifth embodiment will now be described.

In this embodiment, a cooling operation carried out with the power source energized is started from a freezing mode.

In an operating method during the energization of a power source, the chambers to be cooled are switched from one to the other at intervals of temperature levels or time, and this method is different from a regular control method in which the interior of the refrigeration chamber and freezing chambers are cooled.

When the power source is turned off temporarily due to power failure, it is conceived that the balance between the temperature and pressure in the refrigeration chamber and those in the freezing chambers is lost as mentioned above in some cases where the operation of the refrigerator during service interruption is in a certain condition.

Therefore, even when the power source is reenergized, the compressor 15 is restarted from a freezing mode, and the switching of the chambers to be cooled from one to the other is thereafter done by a regular control operation.

### (Modified Example 1-1)

Although indirect cooling type refrigerators in which the cold air is sent into the refrigeration chamber and freezing chambers by cooling such fans as are used in the above-described embodiments, direct cooling type refrigerators in which evaporators are provided on wall surfaces may be used instead.

### (Modified Example 1-2)

Although a noninflammable refrigerant is used in the above-described embodiments, an inflammable refrigerant (HC refrigerant) can also be used instead. The reason resides in that an inflammable refrigerant can also be used safely since the amount of refrigerant can be set small in the above-described embodiments.

### <Second embodiment>

A second embodiment of the present invention will now be described in detail with reference to the drawings.

First, a regular inside-chamber temperature control operation in a refrigerator in this embodiment will be described with reference to Figs. 1 and 2.

A high-temperature refrigerant compressed and pressurized in a compressor 15 is subjected to heat radiation in an evaporator 21, and the refrigerant coming out from the evaporator enters a three-way valve 22.

When an inside-chamber temperature in a refrigeration temperature zone 30 becomes higher than a set level, a cooling operation of a refrigeration mode is carried out.

In this refrigeration mode, the three-way valve 22 is shifted to make the refrigerant flow into a refrigeration capillary tube 23. The resultant refrigerant is evaporated in an R evaporator 10, and the refrigeration temperature zone 30 is cooled with the resultant refrigerant. The evaporated and gasified refrigerant returns to the compressor 15. Since the temperature in an F evaporator 12 is lower than an evaporation temperature in the refrigeration mode, a check valve 17 is provided in a flow passage on the side of the F evaporator 12 so as to prevent the refrigerant from flowing into the F evaporator 12 and being re-condensed.

When the temperature in a freezing chamber of the freezing temperature zone 40 becomes higher than a set level, a freezing mode cooling operation is carried out.

In the freezing mode, the refrigerant flow passage is shifted so that the refrigerant flows into a freezing capillary tube 24, by shifting the three-way valve 22. The refrigerant is evaporated in the F evaporator 12, and the evaporated refrigerant returns to the compressor 15 through an accumulator 16 and a check valve 17.

These evaporators 10, 12 are formed of heat exchangers in which the refrigerant is subjected to heat exchange with the air by forcible convection. Therefore, simultaneously with the shifting of the refrigerant flow passage, the R fan 11 and freezing fan 13 are operated when the cooling operation of the refrigeration mode and the cooling operation of the freezing mode are carried out respectively, the interior of the refrigeration chamber and freezing chamber being thereby cooled.

A control operation starting from a non-cooling condition like a condition in which a power source starts being energized will now be described.

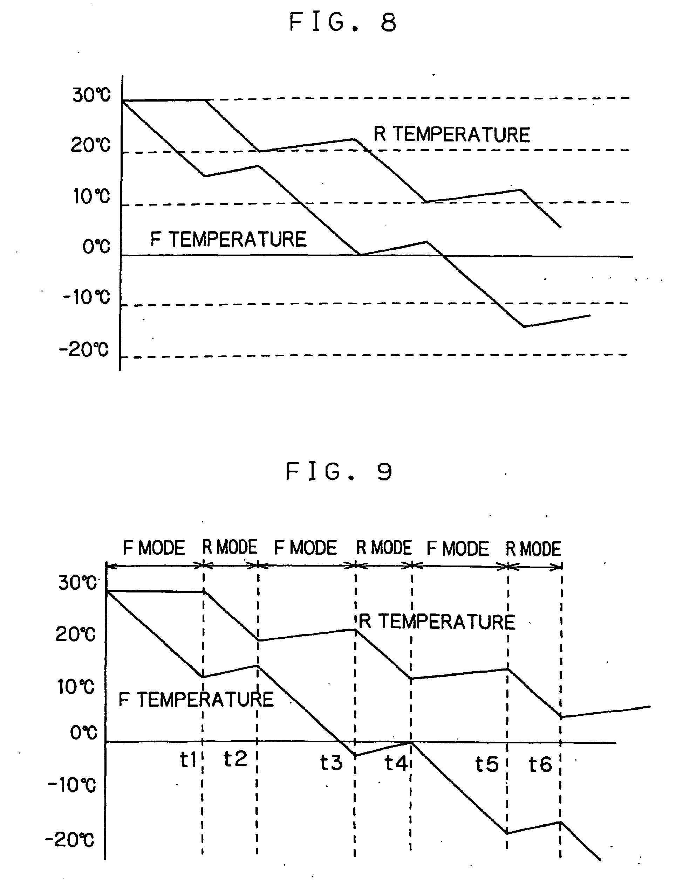

Fig. 8 shows variation of the temperatures in the refrigeration chamber and freezing chambers recorded when a cooling operation is started from a condition in which the interior of these chambers is not cooled.

In this embodiment, it is assumed that initial values of the temperatures in the interior of both the refrigeration chamber of the refrigeration temperature zone 30 and freezing chamber of the freezing temperature zone 40 are 30°C, and that a final target refrigeration temperature and a final target freezing temperature in the refrigeration temperature zone 30 and freezing temperature zone 40 are 3°C and -20°C respectively.

In a first step, 15°C which causes the temperature in the freezing temperature zone 40 to decrease from 30°C by 15 K is set as a first freezing target temperature, and a freezing mode cooling operation is carried out as the F fan 13 is operated.

When the freezing temperature zone 40 attains the first target temperature of 15°C, the freezing mode is switched as a second step to a refrigeration mode for cooling the refrigeration temperature zone 30.

In the second step, 20°C which causes the temperature in the refrigeration temperature zone 30 to decrease from 30°C by 10 K is set as a first target refrigeration temperature. The R fan 11 is operated in the same manner as in the case where the freezing temperature zone 40 is cooled.

The freezing temperature zone 40 and refrigeration temperature zone 30 are thereafter cooled with the target temperatures therein reduced by 15 K and 10 K respectively.

The reducing of the temperatures in these steps can be changed in accordance with the temperature of the outside air and final target temperatures. It is also possible to change the number of the steps and the target temperatures in the changed steps.

When the target temperatures are thus set in a stepped manner, both the refrigeration temperature zone 30 and freezing temperature zone 40 can be cooled speedily.

### (Modified Example 2-1)

This control operation can also be carried out by fixing a control pattern to a predetermined pattern based on an initial temperature (for example, 35°C) assumed when a compressor 15 is started practically from a non-cooling condition of the refrigerator.

### <Third embodiment>

A control operation from a non-cooling condition in a third embodiment will now be described on the basis of Fig. 9.

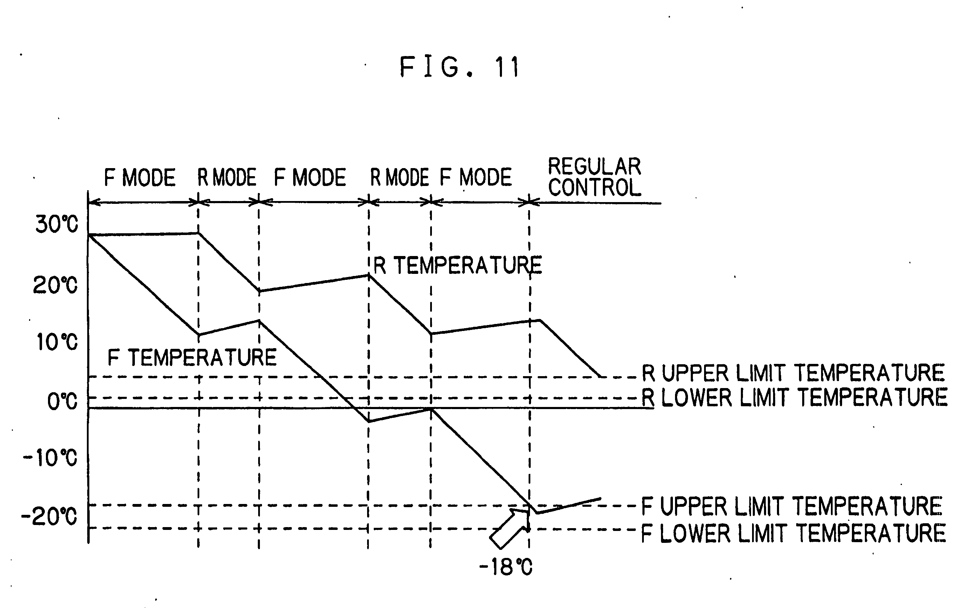

In the control operation from a non-cooling condition in the second embodiment, the switching of a mode to the other was done on the basis of the target temperatures. In the third embodiment, a freezing mode and a refrigeration mode are switched to each other on the basis of the time as shown in Fig. 11.

A cooling operation of a freezing mode (called a F mode in the drawing) is carried out from an instant 0 to an instant t1, and a cooling operation of a refrigeration mode (called a R mode in the drawing) from the following period of time from the instant t1 to an instant t2. The refrigeration temperature zone 30 and freezing temperature zone 40 are thereafter cooled alternately by repeatedly carrying out the freezing mode and refrigeration mode cooling operations repeatedly. These temperature zones are thus cooled to the final target temperatures.

When the cooling time is thus set in a stepped manner, both the refrigeration temperature zone 30 and freezing temperature zone 40 can be rapidly cooled.

### (Modified Example 3-1)

This embodiment can also be carried out by fixing a control pattern to a pattern starting from an initial temperature (for example, 35°C) assumed when a compressor is started practically from a non-cooling condition of the refrigerator, in the same manner as the control operation from a non-cooling condition in the second embodiment.

### (Modified Example 3-2)

A control operation of a combination of this embodiment and the second embodiment may be carried out.

To be exact, an initial freezing mode cooling operation is carried out until the temperature decreases by 15 K or until the time t1 elapses, and a refrigeration mode cooling operation is thereafter carried out.

### <Fourth embodiment>

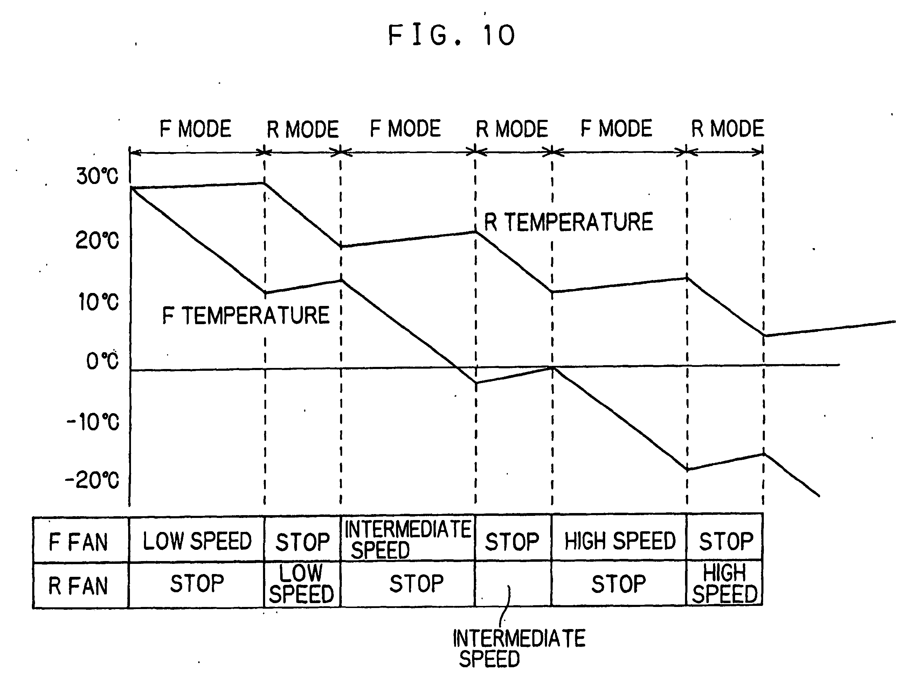

A control operation starting from a non-cooling condition in the fourth embodiment will now be described on the basis of Fig. 10.

First, the circumstances, i.e., problems which necessitate carrying out this embodiment will be pointed out.

In a stage (initial stage) in which the temperatures in the chambers to be cooled are high, the refrigerant evaporation temperatures and pressures in evaporators become high. When the evaporation temperatures and pressures become high, a suction refrigerant density in a compressor 15 becomes high, so that a refrigerant circulation rate becomes high.

Therefore, a required heat radiation rate in a condenser 21 also becomes high. When the heat radiation rate in the condenser 21 is not sufficiently high, a condensation temperature and a condensation pressure become high. Consequently, a load on the compressor 15 becomes large, and a large current flows. When the condenser 21 is buried in a refrigerator body 1, there is the possibility that a user touching the condenser feels hot.

Therefore, the control operation in this embodiment is carried out.

In the case of an indirect cooling type refrigerator in which cold air is made to flow by a cooling fan (a R fan 11 or a F fan 13), an increase in the condensation temperature and pressure can be avoided by reducing a rotational frequency of the cooling fan, a heat exchange rate in an evaporator (an R evaporator 10 or an F evaporator 12) and a refrigerant evaporation temperature, and restricting an increase in a refrigerant circulation rate.

A required heat radiation rate is also high. Therefore, when the condenser 21 is cooled by a C fan 25, it is effective to increase the heat radiation capacity by heightening the rotational frequency thereof.

When the temperature in the chamber to be cooled becomes low, the refrigerant evaporation temperature also becomes low. Accordingly, the refrigerant circulation rate also becomes low, so that it becomes possible to increase the rotational frequency of the cooling fan.

### (Modified Example 4-1)

In the second and third modes of embodiment, the cooling operations are controlled in a stepped manner on the basis of the temperature in the chamber to be cooled, and on the basis of the time respectively. Therefore, it is possible to set in advance the rotational frequency of the R fan 11 or F fan 13 in each step as shown in Fig. 10.

### <Fifth embodiment>

A control operation started from a non-cooling condition in the fifth embodiment will now be described.

This embodiment shows a case where the capacity of a compressor 15 can be changed, for example, a case where the capacity of the compressor 15 can be increased or decreased by changing the rotational frequency of a motor by an inverter.

When the temperature in a chamber to be cooled is high just as in the control operation starting from the non-cooling condition in the fourth embodiment, a cooling operation can be carried out without imparting a load to a refrigerating cycle, by lowering the capacity of the compressor 15 and thereby reducing a refrigerant circulation rate.

### (Modified Example 5-1)

The cooling operation can also be carried out by combining as described in the fourth embodiment the controlling of the rotational frequency of the cooling fan and that of the capacity of the compressor 15 with each other.

### <Sixth embodiment>

A control operation starting from a non-cooling condition in a sixth embodiment will now be described on the basis of Fig. 11.

In the second and third modes of embodiment, the cooling of the refrigeration temperature zone 30 and freezing temperature zone 40 was done alternately from a non-cooling condition in which the power source was energized, in accordance with a predetermined control pattern.

When the temperature in a chamber to be cooled becomes not higher than a predetermined level, for example, when the temperature in a refrigeration temperature zone 30 or a freezing temperature zone 40 reaches an upper limit level in a range, which has a predetermined width, of set temperatures in the sixth embodiment, a target temperature, which a user set, in an object chamber can be attained smoothly by switching a control operation to the above-mentioned regular inside-chamber temperature control operation.

For example, referring to Fig. 11, the temperature in the freezing temperature zone 40 reaches at a point of an arrow a set upper limit level of -18°C.

Therefore, at this point in time, the control operation can be switched to a regular inside-chamber temperature control operation.

### <Seventh embodiment>

When the temperature in a chamber to be cooled is low at the time of energization of a power source, or when the temperature of the outside air is low, in a control operation starting from a non-cooling condition in the second to fifth modes of embodiment, the condensation temperature does not become high even though a regular inside-chamber temperature control operation is carried out.

Therefore, in the seventh embodiment, the cooling of an object chamber is done by such a control operation starting from the non-cooling condition as those in the second to fifth modes of embodiment only when the temperatures in both of the chambers of a refrigeration temperature zone 30 and a freezing temperature zone 40 are higher than set levels.

### <Eighth embodiment>

A control operation starting from a non-cooling condition in the eighth embodiment will now be described.

When the temperature in an R evaporator 10 is lower than a refrigerant evaporation temperature in an F evaporator 12 in a freezing mode, a refrigerant coming out from the F evaporator 12 flows into the R evaporator 10, and is re-condensed. The refrigerant in a freezing cycle gathers in the R evaporator 10, and a shortage of refrigerant occurs.

In general, the temperature in the freezing temperature zone 40 is lower than that in the refrigeration temperature zone 30, and a problem does not arise. However, when the inside-chamber temperatures in both the refrigeration temperature zone 30 and freezing temperature zone 40 are high just as those at the time of energization of a power source, the temperature in the refrigeration temperature zone 30 becomes lower than that in the freezing temperature zone in some cases.

Therefore, in this embodiment, the cooling of the refrigeration temperature zone 30 finishes in the condition in which the temperature in the freezing temperature zone 40 (refrigerant evaporation temperature in an R evaporator 10 to be exact) is higher than that in an F evaporator 12.

In a structure in which a reverse flow of refrigerant does not occur, i.e., in a structure having a check valve at an outlet of the R evaporator 10 as well, or a three-way valve in a portion at which a pipe extending from the R evaporator 10 and a pipe extending from the freezing temperature zone 40 meet each other, or a structure using two two-way valves, it is unnecessary to carry out such a control operation as in this embodiment.

### <Ninth embodiment>

A control operation starting from a non-cooling condition in a ninth embodiment will now be described.

When such refrigerators as in the second to eighth modes of embodiment in which a control operation starting from a non-cooling condition is practiced has a rapid freezing function, the interior of a chamber to be cooled is not sufficiently cooled during the practicing of these control operations. Therefore, a rapid cooling operation cannot be carried out.

Therefore, in a control operation starting from a non-cooling condition in the ninth embodiment, a demand made by a user is accepted but the practicing of a control operation for carrying out a rapid freezing of an object chamber is not done. Such a control operation is carried out in a stage in which the interior of the object chamber is cooled to a temperature lower than a predetermined level with a principal control operation finished.

### <Tenth embodiment>

Each of the above modes of embodiment is directed to an indirect cooling type refrigerator in which cold air is sent by cooling fans to the interior of chambers to be cooled. Each of these embodiments may also be directed to a direct cooling type refrigerator provided with evaporators on wall surfaces in the interior of the evaporators.

### <Eleventh embodiment>

Although a noninflammable refrigerant is used in each of the above modes of embodiments, an inflammable refrigerant (HC refrigerant) can also be used instead. Since the amount of refrigerant can be set small in each of the above modes of embodiments, even an inflammable refrigerant can be used safely.

According to the inventions set forth in Claim 1 and Claim 7, the starting of a compressor from a stopping condition thereof is done in a freezing mode irrespective of whether a demand is made by the freezing chamber or the refrigeration chamber. Therefore, even when the balance between the amount of refrigerant in the refrigeration chamber and that thereof in the freezing chamber is lost due to the reversion of the temperatures in these chambers or a decrease in a difference between the temperatures in these chambers ascribed to the inflow of a high-temperature refrigerant, a back flow of refrigerant in the form of a liquid can be avoided. Also, a predetermined amount of refrigerant can be stored in the F evaporator, and an efficient alternate cooling of the two chambers can be done with a substantially proper balance of the amounts of refrigerant therein maintained.

According to the inventions set forth in Claim 2 and Claim 8, when the compressor is started by a demand made by the refrigeration chamber, a cooling operation in a freezing mode is carried out for a predetermined period of time, and this mode is then switched to a refrigeration mode. Therefore, the refrigeration chamber which made a demand can be cooled in a minimum period of time in which the balance of the amounts of refrigerant is substantially maintained, so that an increase in the range of temperature variation in the refrigeration chamber can be minimized.

According to the inventions set forth in Claim 3 and Claim 9, a predetermined period of time for carrying out a freezing mode cooling operation is set short when the rotational frequency of the compressor is high, and long when the rotational frequency thereof is low. This enables the controlling of the rotational frequency of the compressor to be done in the same manner as in a regular case, and the balance between the amount of refrigerant in the R evaporator and that thereof in the F evaporator to be maintained properly by an easy control operation.

According to the inventions as set forth in Claim 4 and Claim 10, when the compressor is started by a demand made by the refrigeration chamber, the R fan is operated for a predetermined period of time. Therefore, a more than necessary amount of refrigerant stored in the R evaporator can be transferred to the freezing chamber speedily, and the time during which the actual mode is switched to a refrigeration mode in which the execution of a cooling operation was demanded can be reduced. This enables an increase in the temperature in the refrigeration chamber to be held down.

According to the inventions as set forth in Claim 5 and Claim 11, the time during which the R fan is operated is set synchronous with the predetermined period of time during which a freezing mode cooling operation is carried out, so that the time for transferring the actual cooling operation to a demanded refrigeration room cooling operation can be reduced by a simple control operation.

According to the inventions as set forth in Claim 6 and Claim 12, the time during which the R fan is operated is determined in accordance with the temperature detected by the temperature sensor adapted to detect the temperature in the R evaporator. Therefore, an increase in a load due to the excessive operation of the cooling fan can be held down, and the reduction of the time for transferring the actual mode to the demanded refrigeration mode can be effected by a simple control operation. Moreover, the balance between the amount of refrigerant in the R evaporator and that thereof in the F evaporator can be maintained reliably, and a stable operation for cooling a shifted chamber can be carried out.

## Claims

1. A refrigerator (1) having a refrigerating cycle including a compressor (15), a condenser (21) and a change-over valve (22) which are connected in order, and an evaporator (10) in a refrigeration chamber (30) and an evaporator (12) in a freezing chamber (40) which are parallel-connected to the changeover valve via respective restriction mechanisms,
the evaporators (10, 12) being provided therein with a fan (11) for cooling the refrigeration chamber (30) and a fan (13) for cooling the freezing chamber (40) which are adapted to circulate cold air in the respective chambers,
the refrigerator being capable of alternately taking a refrigeration mode for cooling the refrigeration chamber (30) and a freezing mode for cooling the freezing chamber (40), by alternately switching the connection of a refrigerant flow passage to the evaporator (10) in the refrigeration chamber (30) to the connection thereof to the evaporator (12) in the freezing chamber (40), **characterized in that**:
a controller (64) of the refrigerator is adapted to carry out a freezing mode starting operation for starting the refrigerator from a freezing mode (I) after a difference between a temperature in the refrigeration chamber (30) and that in the freezing chamber (40) decreases to a level lower than a set level to cause the compressor (15) to be stopped, or (II) after a defrosting operation is carried out, or (III) at the time of energization of a power source.

2. The refrigerator according to Claim 1, wherein the controller (64) is adapted to switch the freezing mode to a refrigeration mode when the compressor (15) is started in accordance with a demand for a refrigeration mode cooling operation, after the chamber cooling operation is carried out for a predetermined period of time by a freezing mode starting operation.

3. The refrigerator according to Claim 2, wherein the controller (64) is adapted to set the time during which the freezing mode chamber cooling operation is carried out to such a level that decreases in inverse proportion to a rotational frequency of the compressor (15).

4. The refrigerator according to any one of the preceding claims, wherein the controller (64) is adapted to operate the cooling fan (11) in the refrigerator chamber (30) for a predetermined period of time during a freezing mode starting operation when the compressor (15) is started in accordance with a demand for a refrigeration mode cooling operation.

5. The refrigerator according to Claim 4, wherein the controller (64) is adapted to set the time during which the cooling fan (11) in the refrigeration chamber (30) is operated synchronous with that during which a freezing mode starting operation is carried out.

6. The refrigerator according to Claim 4 or 5, wherein the controller (64) is adapted to stop the operation of the cooling fan (11) in the refrigeration chamber (30) when a temperature detected by a sensor for detecting a temperature in the evaporator (10) in the refrigeration chamber (30) increases to a predetermined level.

7. A method of controlling a refrigerator (1) having a refrigerating cycle including a compressor (15), a condenser (21) and a change-over valve (22) which are connected in order, an evaporator (10) in a refrigeration chamber (30) and an evaporator (12) in a freezing chamber (40) which are parallel-connected to the change-over valve (22) via respective restriction mechanisms,
the evaporators (10, 12) being provided therein with a fan (11) for cooling the refrigeration chamber (30) and a fan (13) for cooling the freezing chamber (40) which are adapted to circulate cold air in the respective chambers,
the refrigerator being capable of alternately taking a refrigeration mode for cooling the refrigeration chamber and a freezing mode for cooling the freezing chamber, by switching the connection of a refrigerant flow passage to the evaporator (10) in the refrigeration chamber (30) and the connection thereof to the evaporator (12) in the freezing chamber (40) from one to the other alternately,
**characterized in that**:
the method includes the step of carrying out a freezing mode starting operation for starting the refrigerator from a freezing mode (I) after a difference between a temperature in the refrigeration chamber (30) and that in the freezing chamber (40) decreases to a level lower than a set level to cause the compressor (15) to be stopped, or (II) after a defrosting operation is carried out, or (III) at the time of energization of a power source.

8. The method of controlling a refrigerator according to claim 7, wherein the freezing mode is switched to a refrigeration mode when the compressor (15) is started in accordance with a demand for a refrigeration mode cooling operation, after the chamber cooling operation is carried out for a predetermined period of time by a freezing mode starting operation.

9. The method of controlling a refrigerator according to claim 8, wherein the time during which the freezing mode chamber cooling operation is carried out is set to such a level that decreases in inverse proportion to a rotational frequency of the compressor (15).

10. The method of controlling a refrigerator according to any one of claims 7 to 9, wherein the cooling fan (11) in the refrigeration chamber (30) is operated for a predetermined period of time during a freezing mode starting operation when the compressor (15) is started in accordance with a demand for a freezing mode cooling operation.

11. The method of controlling a refrigerator according to Claim 10, wherein the time during which the cooling fan (11) in the refrigeration chamber (30) is operated is set synchronous with that during which a freezing mode starting operation is carried out.

12. The method of controlling a refrigerator according to claim 10 or 11, wherein the operation of the cooling fan (11) in the refrigeration chamber (30) is stopped when a temperature detected by a sensor adapted to detect the temperature in the evaporator (12) in the refrigeration chamber (40) increases to a predetermined level.

13. The refrigerator according to claim 1, wherein
the controller (64) of the refrigerator is adapted to carry out a freezing mode cooling operation at the time of energization of a power source, and thereafter switch the freezing mode and a refrigeration mode from one to the other alternately every time the temperatures in the freezing chamber (40) and refrigeration chamber (30) decrease by predetermined levels, and
the control operation in this case is carried out from a non-cooling condition which is finished with the temperature in the refrigeration chamber (30) higher than that in the freezing chamber (40).

14. The refrigerator according to claim 1, wherein
the controller (64) of the refrigerator is adapted to carry out a freezing mode cooling operation at the time of energization of a power source, and thereafter switch the freezing mode and a refrigeration mode from one to the other alternately every time a predetermined period of time elapses, and
the control operation in this case is carried out from a non-cooling condition which is finished with the temperature in the refrigeration chamber (30) higher than that in the freezing chamber (40).

15. The refrigerator according to claims 13 and 14, wherein the controller (64) is adapted to rotate when the fan (11) for cooling the refrigeration chamber (30) and the fan (13) for cooling the freezing chamber (40) are provided, the fan (11) for cooling the refrigeration chamber (30) or the fan (13) for cooling the freezing chamber (40) with a low rotational frequency when a difference between an actual temperature in the refrigeration chamber (30) and a final target temperature therein is large, or when a difference between an actual temperature in the freezing chamber (40) and a final target temperature therein is large.

16. The refrigerator according to any one of claims 13 to 15, wherein the controller (64) is adapted to rotate, when condenser radiation fans are provided, the condenser radiation fans with an increased rotational frequency or a maximum rotational frequency when a difference between an actual temperature in the refrigeration chamber (30) and a final target temperature therein is large, or when a difference between an actual temperature in the freezing chamber (40) and a final target temperature therein is large.

17. The refrigerator according to any one of claims 13 to 16, wherein, when the capacity of the compressor (15) can be varied, the controller (64) is adapted to reduce the capacity of the compressor (15) when a difference between an actual temperature in the refrigeration chamber (30) and a maximum target temperature therein is large, or when a difference between an actual temperature in the freezing chamber (40) and a maximum target temperature therein is large.

18. The refrigerator according to any one of claims 13 to 17, wherein the controller (64) is adapted to switch at a point in time at which the temperature in the refrigeration chamber (30) or that in the freezing chamber (40) becomes not higher than a predetermined level, the control operation carried out from a non-cooling condition to regular alternate control operations.

19. The refrigerator according to any one of claims 13 to 18, wherein the controller (64) is adapted not to carry out when the temperature in the refrigeration chamber (30) or the temperature in the freezing chamber (40) is lower than a predetermined level, or when the temperature of the outside air is lower than a predetermined level, the control operation to be executed from the non-cooling condition.

20. The refrigerator according to any one of claims 13 to 19, wherein the controller (64) is adapted not to carry out an ice making operation, a defrosting operation and a rapid cooling operation during the control operation executed from the non-cooling condition, but to carry out the same operations after the control operation executed from the non-cooling condition is switched to the regular alternate cooling operations.

21. The refrigerator according to any one of claims 1 to 6 or 13 to 20, wherein a refrigerant used for the refrigerating cycle is an inflammable refrigerant.

22. The method of controlling a refrigerator according to claim 7, wherein
the method comprises the steps of carrying out a freezing mode cooling operation at the time of energization of a power source, and thereafter switching the freezing mode and a refrigeration mode from one to the other alternately every time the temperatures in the freezing chamber and refrigeration chamber decrease by predetermined levels,
a control operation in this case being carried out from a non-cooling condition which is finished with the temperature in the refrigeration chamber higher than that in the freezing chamber.

23. The method of controlling a refrigerator according to claim 7, wherein
the method comprises the steps of carrying out a freezing mode cooling operation at the time of energization of a power source, and thereafter switching the freezing mode and refrigeration mode from one to the other alternately every time a predetermined period of time elapses,
the control operation in this case being carried out from a non-cooling condition which is finished with the temperature in the refrigeration chamber (30) higher than that in the freezing chamber (40).

24. The method of controlling a refrigerator according to Claim 22 and Claim 23, wherein, when a fan (11) for cooling the refrigeration chamber (30) and a fan (13) for cooling the freezing chamber (40) are provided, the fan (11) for cooling the refrigeration chamber (30) or the fan (13) for cooling the freezing chamber (40) is rotated with a low rotational frequency when a difference between an actual temperature in the refrigeration chamber (30) and a final target temperature therein is large, or when a difference between an actual temperature in the freezing chamber (40) and a final target temperature therein is large.

25. The method of controlling a refrigerator according to any one of claims 22 to 24, wherein, when condenser radiation fans are provided, the condenser radiation fans are rotated with an increased rotational frequency or a maximum rotational frequency when a difference between an actual temperature in the refrigeration chamber (30) and a final target temperature therein is large, or when a difference between an actual temperature in the freezing chamber (40) and a final target temperature therein is large.

26. The method of controlling a refrigerator according to any one of claims 22 to 25, wherein, when the capacity of the compressor (15) can be varied, the capacity of the compressor (15) is reduced when a difference between an actual temperature in the refrigeration chamber (30) and a maximum target temperature therein is large, or when a difference between an actual temperature in the freezing chamber (40) and a maximum target temperature therein is large.

27. The method of controlling a refrigerator according to an one of claims 22 to 26, wherein the control operation carried out from a non-cooling condition is switched to regular alternate control operations at a point in time at which the temperature in the refrigeration chamber (30) or that in the freezing chamber (40) becomes not higher than a predetermined level.

28. The method of controlling a refrigerator according to any one of claims 22 to 27, wherein the control operation to be executed from the non-cooling condition is not carried out when the temperature in the refrigeration chamber (30) or the temperature in the freezing chamber (40) is lower than a predetermined level, or when the temperature of the outside air is lower than a predetermined level.

29. The method of controlling a refrigerator according to any one of claims 22 to 28, wherein an ice making operation, a defrosting operation and a rapid cooling operation are not carried out during the control operation executed from the non-cooling condition but carried out after the control operation executed from the non-cooling condition is switched to the regular alternate cooling operations.

30. The method of controlling a refrigerator according to any one of claims 7 to 12 or 22 to 29, wherein the refrigerant used for the freezing cycle is an inflammable refrigerant.

## Patentansprüche

1. Ein Kühlschrank (1), welcher einen Kühlkreislauf mit einem Kompressor (15), einem Kondensator (21) und einem Umschaltventil (22), die in dieser Reihenfolge verbunden sind, und einen Verdunster (10) in einem Kühlfach (30) sowie einen Verdunster (12) in einem Gefrierfach (40) umfasst, die über jeweilige Drosselmechanismen parallel mit dem Umschaltventil verbunden sind, wobei
die Verdunster (10, 12) darin mit einem Ventilator (11) zur Kühlung des Kühlfaches (30) und einem Ventilator (13) zur Kühlung des Gefrierfaches (40) versehen sind, die zum Zirkulieren kalter Luft in den jeweiligen Fächern ausgebildet sind,
der Kühlschrank durch abwechselndes Schalten der Verbindung eines Kühlmittelstromdurchgangs zum Verdunster (10) in der Kühlkammer (30) zu seiner Verbindung zum Verdunster (12) in der Gefrierkammer (40) geeignet ist, abwechselnd einen Kühlmodus zur Kühlung des Kühlfaches (30) und einen Gefriermodus zur Kühlung des Gefrierfaches (40) einzunehmen, **dadurch gekennzeichnet, dass**:
die Steuerung (64) des Kühlschranks ausgebildet ist, zum Starten des Kühlschranks aus einem Gefriermodus einen Gefriermodusanlaufvorgang auszuführen, (I) nachdem die Differenz zwischen einer Temperatur im Kühlfach (30) und
der im Gefrierfach (40) auf einen Wert unterhalb eines eingestellten Wertes sinkt, um das Anhalten des Kompressors (15) zu veranlassen, oder (II) nachdem ein Abtauvorgang durchgeführt wurde, oder (III) zum Zeitpunkt der Beaufschlagung mit Energie einer Leistungsquelle.

2. Der Kühlschrank nach Anspruch 1, bei welchem die Steuerung (64) ausgebildet ist, den Gefriermodus in einen Kühlmodus zu schalten, wenn der Kompressor (15) gemäß einer Nachfrage nach einem Kühlmoduskühlvorgang gestartet wird, nachdem der Fachkühlvorgang über einen vorgegebenen Zeitraum hinweg durch einen Gefriermodusanlaufvorgang durchgeführt wurde.

3. Der Kühlschrank nach Anspruch 2, bei welchem die Steuerung (64) ausgebildet ist, die Zeit, während welcher der Gefriermodusfachkühlvorgang ausgeführt wird, auf einen Wert einzustellen, der mit umgekehrter Proportionalität zur Drehzahl des Kompressors (15) sinkt.

4. Der Kühlschrank gemäß einem der vorherigen Ansprüche, bei welchem die Steuerung (64) ausgebildet ist, den Kühlventilator (11) in der Kühlkammer (30) während eines Gefriermodusanlaufvorgangs über einen vorgegebenen Zeitraum hinweg zu betreiben, wenn der Kompressor (15) gemäß einer Nachfrage nach einem Kühlmoduskühlvorgang gestartet wurde.

5. Der Kühlschrank nach Anspruch 4, bei welchem die Steuerung (64) ausgebildet ist, die Zeit, während welcher der Kühlventilator (11) in der Kühlkammer (30) betrieben wird, synchron zu derjenigen einzustellen, während der ein Gefriermodusanlaufvorgang durchgeführt wird.

6. Der Kühlschrank nach Anspruch 4 oder 5, bei welchem die Steuerung (64) ausgebildet ist, den Betrieb des Kühlventilators (11) in dem Kühlfach (30) zu stoppen, wenn eine von einem Sensor zum Erfassen einer Temperatur im Verdunster (10) im Kühlfach (30) erfasste Temperatur auf einen vorgegebenen Wert ansteigt.

7. Ein Verfahren zur Steuerung eines Kühlschranks (1), welcher einen Kühlkreislauf mit einem Kompressor (15), einem Kondensator (21) und einem Umschaltventil (22), die in dieser Reihenfolge verbunden sind, und einen Verdunster (10) in einem Kühlfach (30) sowie einen Verdunster (12) in einem Gefrierfach (40) umfasst, die über jeweilige Drosselmechanismen parallel mit dem Umschaltventil verbunden sind, wobei die Verdunster (10, 12) in ihnen mit einem Ventilator (11) zur Kühlung des Kühlfaches (30) und einem Ventilator (13) zur Kühlung des Gefrierfaches (40) versehen sind, die zum Zirkulieren kalter Luft in den jeweiligen Fächern ausgebildet sind,
der Kühlschrank durch Schalten der Verbindung eines Kühlmittelstromdurchgangs zum Verdunster (10) in der Kühlkammer (30) und seiner Verbindung zum Verdunster (12) in der Gefrierkammer (40) abwechselnd von einem zum anderen geeignet ist, abwechselnd einen Kühlmodus zur Kühlung des Kühlfaches (30) und einen Gefriermodus zur Kühlung des Gefrierfaches (40) einzunehmen
**dadurch gekennzeichnet, dass**
das Verfahren den Schritt umfasst, einen Gefriermodusanlaufvorgang auszuführen, um den Kühlschrank aus einem Gefriermodus zu starten, (I) nachdem die Differenz zwischen einer Temperatur im Kühlfach (30) und der im Gefrierfach (40) auf einen Wert unterhalb eines eingestellten Wertes sinkt, um das Anhalten des Kompressors (15) zu veranlassen, oder (II) nachdem ein Abtauvorgang durchgeführt wurde, oder (III) zum Zeitpunkt der Beaufschlagung mit Energie einer Leistungsquelle.

8. Das Verfahren zur Steuerung eines Kühlschranks gemäß Anspruch 7, bei welchem vom Gefriermodus in einen Kühlmodus geschaltet wird, wenn der Kompressor (15) gemäß einer Nachfrage nach einem Kühlmoduskühlvorgang gestartet wird, nachdem der Fachkühlvorgang über einen vorgegebenen Zeitraum hinweg durch einen Gefriermodusanlaufvorgang durchgeführt wurde.

9. Das Verfahren zur Steuerung eines Kühlschranks gemäß Anspruch 8, bei welchem die Zeit, während welcher der Gefriermodusfachkühlvorgang ausgeführt wird, auf einen Wert eingestellt wird, der mit umgekehrter Proportionalität zur Drehzahl des Kompressors (15) sinkt.

10. Das Verfahren zur Steuerung eines Kühlschranks gemäß einem der Ansprüche 7 bis 9, bei welchem der Kühlventilator (11) in der Kühlkammer (30) während eines Gefriermodusanlaufvorgangs über einen vorgegebenen Zeitraum hinweg betrieben wird, wenn der Kompressor (15) gemäß einer Nachfrage nach einem Kühlmoduskühlvorgang gestartet wurde.

11. Das Verfahren zur Steuerung eines Kühlschranks gemäß Anspruch 10, bei welchem die Zeit, während welcher der Kühlventilator (11) in der Kühlkammer (30) betrieben wird, synchron zu derjenigen eingestellt wird, während der ein Gefriermodusanlaufvorgang durchgeführt wird.

12. Das Verfahren zur Steuerung eines Kühlschranks gemäß Anspruch 10 oder 11, bei welchem der Betrieb des Kühlventilators (11) in dem Kühlfach (30) gestoppt wird, wenn eine von einem zum Erfassen einer Temperatur im Verdunster (10) im Kühlfach (30) ausgebildeten Sensor erfasste Temperatur auf einen vorgegebenen Wert ansteigt.

13. Der Kühlschrank gemäß Anspruch 1, bei welchem die Steuerung (64) des Kühlschranks ausgebildet ist, zum Zeitpunkt der Beaufschlagung mit Energie einer Leistungsquelle einen Gefriermoduskühlvorgang auszuführen, und danach jedes mal dann, wenn die Temperatur im Gefrierfach (40) und Kühlfach (30) um vorgegebene Werte sinkt, abwechselnd zwischen dem Gefriermodus und einem Kühlmodus hin und her zu schalten, und
der Steuerungsvorgang in diesem Fall von einer nichtkühlenden Bedingung durchgeführt wird, welche mit höherer Temperatur im Kühlfach (30) als im Gefrierfach (40) endet.

14. Der Kühlschrank gemäß Anspruch 1, bei welchem die Steuerung (64) des Kühlschranks ausgebildet ist, zum Zeitpunkt der Beaufschlagung mit Energie einer Leistungsquelle einen Gefriermoduskühlvorgang auszuführen, und danach jedes mal dann, wenn eine vorgegebene Zeitdauer abläuft, abwechselnd zwischen dem Gefriermodus und einem Kühlmodus hin und her zu schalten, und
der Steuerungsvorgang in diesem Fall von einer nichtkühlenden Bedingung durchgeführt wird, welche mit höherer Temperatur im Kühlfach (30) als im Gefrierfach (40) endet.

15. Der Kühlschrank gemäß Anspruch 13 und 14, bei welchem dann, wenn der Ventilator (11) zur Kühlung des Kühlfachs (30) und der Ventilator (13) zur Kühlung des Gefrierfachs (40) vorhanden sind, die Steuerung (64) ausgebildet ist, den Ventilator (11) zur Kühlung des Kühlfachs (30) oder den Ventilator (13) zur Kühlung des Gefrierfachs (40) mit geringer Drehzahl zu rotieren, wenn eine Differenz zwischen einer Ist-Temperatur im Kühlfach (30) und der endgültigen Soll-Temperatur darin groß ist, oder wenn eine Differenz zwischen einer Ist-Temperatur im Gefrierfach (40) und einer endgültigen Soll-Temperatur darin groß ist.

16. Der Kühlschrank gemäß einem der Ansprüche 13 bis 15, bei welchem dann, wenn Kondensatorstrahlungslüfter vorhanden sind, die Steuerung (64) ausgebildet ist, die Kondensatorstrahlungslüfter mit einer erhöhten Drehzahl oder einer Maximaldrehzahl zu rotieren, wenn eine Differenz zwischen einer Ist-Temperatur im Kühlfach (30) und der endgültigen Soll-Temperatur darin groß ist, oder wenn eine Differenz zwischen einer Ist-Temperatur im Gefrierfach (40) und einer endgültigen Soll-Temperatur darin groß ist.

17. Der Kühlschrank gemäß einem der Ansprüche 13 bis 16, bei welchem dann, wenn die Leistung des Kompressors (15) variiert werden kann, die Steuerung (64) ausgebildet ist, die Leistung des Kompressors (15) zu reduzieren, wenn eine Differenz zwischen einer Ist-Temperatur im Kühlfach (30) und der maximalen Soll-Temperatur darin groß ist, oder wenn eine Differenz zwischen einer Ist-Temperatur im Gefrierfach (40) und einer maximalen Soll-Temperatur darin groß ist.

18. Der Kühlschrank gemäß einem der Ansprüche 13 bis 17, bei welchem die Steuerung (64) ausgebildet ist, zu dem Zeitpunkt, zu dem die Temperatur im Kühlfach (30) oder die im Gefrierfach (40) nicht größer als ein vorbestimmter Wert wird, den von einer nichtkühlenden Bedingung ausgeführten Steuerungsvorgang zu regulären, abwechselnden Steuerungsvorgängen zu schalten.

19. Der Kühlschrank gemäß einem der Ansprüche 13 bis 18, bei welchem die Steuerung (64) ausgebildet ist, den von einer nichtkühlenden Bedingung ausgeführten Steuerungsvorgang nicht durchzuführen, wenn die Temperatur im Kühlfach (30) oder die Temperatur im Gefrierfach (40) niedriger ist als ein vorbestimmter Wert ist, oder wenn die Temperatur der Außenluft geringer ist als ein vorbestimmter Wert.

20. Der Kühlschrank gemäß einem der Ansprüche 13 bis 19, bei welchem die Steuerung (64) ausgebildet ist, während der von einer nichtkühlenden Bedingung ausgeübten Steuerung einen Eiserzeugungsbetrieb, einen Abtaubetrieb und einen Schnellkühlvorgang nicht durchzuführen, diese Betriebe aber durchzuführen, nachdem der von einer nichtkühlenden Bedingung ausgeübte Steuerungsvorgang zum regulären, abwechselnden Steuerungsbetrieb gewechselt ist.

21. Der Kühlschrank gemäß einem der Ansprüche 1 bis 6 oder 13 bis 20, bei welchem das im Kühlkreislauf verwendete Kühlmittel ein entflammbares Kühlmittel ist.

22. Das Verfahren zur Steuerung eines Kühlschranks gemäß Anspruch 7, bei welchem das Verfahren die Schritte umfasst, zum Zeitpunkt der Beaufschlagung mit Energie einer Leistungsquelle einen Gefriermoduskühlvorgang auszuführen, und danach jedes mal dann, wenn die Temperatur im Gefrierfach (40) und Kühlfach (30) um vorgegebene Werte sinkt, abwechselnd zwischen dem Gefriermodus und einem Kühlmodus hin und her zu schalten, und
der Steuerungsvorgang in diesem Fall von einer nichtkühlenden Bedingung durchgeführt wird, welche mit höherer Temperatur im Kühlfach (30) als im Gefrierfach (40) endet.

23. Das Verfahren zur Steuerung eines Kühlschranks gemäß Anspruch 7, bei welchem das Verfahren die Schritte umfasst, zum Zeitpunkt der Beaufschlagung mit Energie einer Leistungsquelle einen Gefriermoduskühlvorgang auszuführen, und danach jedes mal dann, wenn eine vorgegebene Zeitdauer abläuft, abwechselnd zwischen dem Gefriermodus und einem Kühlmodus hin und her zu schalten, und
der Steuerungsvorgang in diesem Fall von einer nichtkühlenden Bedingung durchgeführt wird, welche mit höherer Temperatur im Kühlfach (30) als im Gefrierfach (40) endet.

24. Das Verfahren zur Steuerung eines Kühlschranks gemäß Anspruch 22 und 23, bei welchem dann, wenn der Ventilator (11) zur Kühlung des Kühlfachs (30) und der Ventilator (13) zur Kühlung des Gefrierfachs (40) vorhanden sind, der Ventilator (11) zur Kühlung des Kühlfachs (30) oder der Ventilator (13) zur Kühlung des Gefrierfachs (40) mit geringer Drehzahl rotiert wird, wenn eine Differenz zwischen einer Ist-Temperatur im Kühlfach (30) und der endgültigen Soll-Temperatur darin groß ist, oder wenn eine Differenz zwischen einer Ist-Temperatur im Gefrierfach (40) und einer endgültigen Soll-Temperatur darin groß ist.

25. Das Verfahren zur Steuerung eines Kühlschranks gemäß einem der Ansprüche 22 bis 24, bei welchem dann, wenn Kondensatorstrahlungslüfter vorhanden sind, die Kondensatorstrahlungslüfter mit einer erhöhten Drehzahl oder einer Maximaldrehzahl rotiert werden, wenn eine Differenz zwischen einer Ist-Temperatur im Kühlfach (30) und der endgültigen Soll-Temperatur darin groß ist, oder wenn eine Differenz zwischen einer Ist-Temperatur im Gefrierfach (40) und einer endgültigen Soll-Temperatur darin groß ist.

26. Das Verfahren zur Steuerung eines Kühlschranks gemäß einem der Ansprüche 22 bis 25, bei welchem dann, wenn die Leistung des Kompressors (15) variiert werden kann, die Leistung des Kompressors (15) reduziert wird, wenn eine Differenz zwischen einer Ist-Temperatur im Kühlfach (30) und der maximalen Soll-Temperatur darin groß ist, oder wenn eine Differenz zwischen einer Ist-Temperatur im Gefrierfach (40) und einer maximalen Soll-Temperatur darin groß ist.

27. Das Verfahren zur Steuerung eines Kühlschranks gemäß einem der Ansprüche 22 bis 26, bei welchem zu dem Zeitpunkt, zu dem die Temperatur im Kühlfach (30) oder die im Gefrierfach (40) nicht größer als ein vorbestimmter Wert wird, der von einer nichtkühlenden Bedingung ausgeführte Steuerungsvorgang zu regulären, abwechselnden Steuerungsvorgängen geschaltet wird.

28. Das Verfahren zur Steuerung eines Kühlschranks gemäß einem der Ansprüche 22 bis 27, bei welchem der von einer nichtkühlenden Bedingung ausgeführte Steuerungsvorgang nicht durchgeführt wird, wenn die Temperatur im Kühlfach (30) oder die Temperatur im Gefrierfach (40) niedriger ist als ein vorbestimmter Wert ist, oder wenn die Temperatur der Außenluft geringer ist als ein vorbestimmter Wert.

29. Das Verfahren zur Steuerung eines Kühlschranks gemäß einem der Ansprüche 22 bis 28, bei welchem während des von einer nichtkühlenden Bedingung ausgeübten Steuerungsvorgangs ein Eiserzeugungsbetrieb, ein Abtaubetrieb und ein Schnellkühlvorgang nicht durchgeführt wird, diese Betriebe aber durchgeführt werden, nachdem der von einer nichtkühlenden Bedingung ausgeübte Steuerungsvorgang zum regulären, abwechselnden Steuerungsbetrieb gewechselt ist.

30. Das Verfahren zur Steuerung eines Kühlschranks gemäß einem der Ansprüche 7 bis 12 oder 22 bis 29, bei welchem das für den Gefrierkreislauf verwendete Kühlmittel ein entflammbares Kühlmittel ist.

## Revendications

1. Réfrigérateur (1) ayant un cycle de réfrigération et comportant un compresseur (15), un condenseur (21) et un robinet inverseur (22) qui sont raccordés en série, et un évaporateur (10) dans une chambre de réfrigération (30) et un évaporateur (12) dans une chambre de congélation (40) qui sont raccordés en parallèle au robinet inverseur par l'intermédiaire de mécanismes de restriction respectifs,
les évaporateurs (10, 12) étant prévus dans celui-ci avec un ventilateur (11) destiné à refroidir la chambre de réfrigération (30) et un ventilateur (13) destiné à refroidir la chambre de congélation (40), lesquels évaporateurs sont adaptés pour faire circuler de l'air froid dans les chambres respectives,
le réfrigérateur étant capable de passer alternativement dans un mode réfrigération pour refroidir la chambre de réfrigération (30) et un mode congélation pour refroidir la chambre de congélation (40), en basculant alternativement du raccordement d'un passage d'écoulement de fluide frigorigène à l'évaporateur (10) dans la chambre de réfrigération (30) à son raccordement à l'évaporateur (12) dans la chambre de congélation (40), **caractérisé en ce que** :
un dispositif de commande (64) du réfrigérateur est adapté pour exécuter une opération de démarrage du mode congélation destiné à faire démarrer le réfrigérateur dans un mode congélation (I) après qu'une différence entre une température dans la chambre de réfrigération (30) et celle dans la chambre de congélation (40) a diminué jusqu'à un niveau inférieur à un niveau établi pour entraîner l'arrêt du compresseur (15), ou (II) après qu'une opération de dégivrage a été exécutée, ou (III) au moment de l'excitation d'une source d'alimentation.

2. Réfrigérateur selon la revendication 1, dans lequel le dispositif de commande (64) est adapté pour basculer du mode congélation à un mode réfrigération lorsque le compresseur (15) est démarré conformément à une demande d'opération de refroidissement en mode réfrigération, après que l'opération de refroidissement de la chambre a été exécutée pendant une période de temps prédéterminée par une opération de démarrage en mode congélation.

3. Réfrigérateur selon la revendication 2, dans lequel le dispositif de commande (64) est adapté pour établir le temps pendant lequel l'opération de refroidissement de la chambre en mode congélation est exécutée à un niveau tel qu'il diminue de façon inversement proportionnelle à une fréquence de rotation du compresseur (15).

4. Réfrigérateur selon l'une quelconque des revendications précédentes, dans lequel le dispositif de commande (64) est adapté pour faire fonctionner le ventilateur de refroidissement (11) dans la chambre de réfrigération (30) pendant une période de temps prédéterminée au cours d'une opération de démarrage en mode congélation lorsque le compresseur (15) est démarré conformément à une demande d'opération de refroidissement en mode réfrigération.

5. Réfrigérateur selon la revendication 4, dans lequel le dispositif de commande (64) est adapté pour établir le temps pendant lequel le ventilateur de refroidissement (11) dans la chambre de réfrigération (30) fonctionne de façon synchrone avec celui pendant lequel une opération de démarrage en mode congélation est exécutée.

6. Réfrigérateur selon la revendication 4 ou 5, dans lequel le dispositif de commande (64) est adapté pour arrêter le fonctionnement du ventilateur de refroidissement (11) dans la chambre de réfrigération (30) lorsqu'une température détectée par un capteur destiné à détecter une température dans l'évaporateur (10) de la chambre de réfrigération (30) augmente jusqu'à un niveau prédéterminé.

7. Procédé destiné à commander un réfrigérateur (1) ayant un cycle de réfrigération et comportant un compresseur (15), un condenseur (21) et un robinet inverseur (22) qui sont raccordés en série, un évaporateur (10) dans une chambre de réfrigération (30) et un évaporateur (12) dans une chambre de congélation (40) qui sont raccordés en parallèle au robinet inverseur (22) par l'intermédiaire de mécanismes de restriction respectifs,
les évaporateurs (10, 12) étant prévus dans celui-ci avec un ventilateur (11) destiné à refroidir la chambre de réfrigération (30) et un ventilateur (13) destiné à refroidir la chambre de congélation (40), lesquels évaporateurs sont adaptés pour faire circuler de l'air froid dans les chambres respectives,
le réfrigérateur étant capable de passer alternativement dans un mode réfrigération pour refroidir la chambre de réfrigération et dans un mode congélation pour refroidir la chambre de congélation, en basculant alternativement entre le raccordement d'un passage d'écoulement de fluide frigorigène à l'évaporateur (10) dans la chambre de réfrigération (30) et son raccordement à l'évaporateur (12) dans la chambre de congélation (40), **caractérisé en ce que** :
le procédé comporte l'étape consistant à exécuter une opération de démarrage en mode congélation destinée à faire démarrer le réfrigérateur dans un mode congélation (I) après qu'une différence entre une température dans la chambre de réfrigération (30) et celle dans la chambre de congélation (40) a diminué jusqu'à un niveau inférieur à un niveau établi pour entraîner l'arrêt du compresseur (15), ou (II) après qu'une opération de dégivrage a été exécutée, ou (III) au moment de l'excitation d'une source d'alimentation.

8. Procédé destiné à commander un réfrigérateur selon la revendication 7, dans lequel on bascule du mode congélation à un mode réfrigération lorsque le compresseur (15) est démarré conformément à une demande d'opération de refroidissement en mode réfrigération, après que l'opération de refroidissement de la chambre a été exécutée pendant une période de temps prédéterminée par une opération de démarrage en mode congélation.

9. Procédé destiné à commander un réfrigérateur selon la revendication 8, dans lequel le temps pendant lequel l'opération de refroidissement de la chambre en mode congélation est exécutée, est établi à un niveau tel qu'il diminue de façon inversement proportionnel à une fréquence de rotation du compresseur (15).

10. Procédé destiné à commander un réfrigérateur selon l'une quelconque des revendications 7 à 9, dans lequel on fait fonctionner le ventilateur de refroidissement (11) dans la chambre de réfrigération (30) pendant une période de temps prédéterminée au cours d'une opération de démarrage en mode congélation lorsque le compresseur (15) est démarré conformément à une demande d'opération de refroidissement en mode congélation.

11. Procédé destiné à commander un réfrigérateur selon la revendication 10, dans lequel le temps pendant lequel on fait fonctionner le ventilateur de refroidissement (11) dans la chambre de réfrigération (30) est établi de façon synchrone avec celui pendant lequel une opération de démarrage en mode congélation est exécutée.

12. Procédé destiné à commander un réfrigérateur selon la revendication 10 ou 11, dans lequel le fonctionnement du ventilateur de refroidissement (11) dans la chambre de réfrigération (30) est arrêté lorsqu'une température détectée par un capteur adapté pour détecter la température dans l'évaporateur (12) de la chambre de réfrigération (40) augmente jusqu'à un niveau prédéterminé.

13. Réfrigérateur selon la revendication 1, dans lequel
le dispositif de commande (64) du réfrigérateur est adapté pour exécuter une opération de refroidissement en mode congélation au moment de l'excitation d'une source d'alimentation, et pour basculer alternativement par la suite entre le mode congélation et un mode réfrigération chaque fois que les températures dans la chambre de congélation (40) et la chambre de réfrigération (30) diminuent jusqu'à des niveaux prédéterminés, et
l'opération de commande est exécutée dans ce cas à partir d'une condition de non refroidissement qui s'achève lorsque la température dans la chambre de réfrigération (30) est supérieure à celle dans la chambre de congélation (40).

14. Réfrigérateur selon la revendication 1, dans lequel
le dispositif de commande (64) du réfrigérateur est adapté pour exécuter une opération de refroidissement en mode congélation au moment de l'excitation d'une source d'alimentation, et pour basculer alternativement par la suite entre le mode congélation et un mode réfrigération chaque fois qu'une période de temps prédéterminée s'est écoulée, et
l'opération de commande dans ce cas est exécutée à partir d'une condition de non refroidissement qui s'achève lorsque la température dans la chambre de réfrigération (30) est supérieure à celle dans la chambre de congélation (40).

15. Réfrigérateur selon les revendications 13 et 14, dans lequel le dispositif de commande (64) est adapté pour mettre en rotation, lorsque le ventilateur (11) destiné à refroidir la chambre de réfrigération (30) et le ventilateur (13) destiné à refroidir la chambre de congélation (40) sont prévus, le ventilateur (11) destiné à refroidir la chambre de réfrigération (30) ou le ventilateur (13) destiné à refroidir la chambre de congélation (40) à une faible vitesse de rotation lorsqu'une différence entre une température réelle dans la chambre de réfrigération (30) et une température cible finale dans celle-ci est importante, ou lorsqu'une différence entre une température réelle dans la chambre de congélation (40) et une température cible finale dans celle-ci est importante.

16. Réfrigérateur selon l'une quelconque des revendications 13 à 15, dans lequel le dispositif de commande (64) est adapté pour mettre en rotation, lorsque des ventilateurs de condenseur sont prévus, des ventilateurs de condenseur à une fréquence de rotation accrue ou une fréquence de rotation maximale lorsqu'une différence entre une température réelle dans la chambre de réfrigération (30) et une température cible finale dans celle-ci est importante, ou lorsqu'une différence entre une température réelle dans la chambre de congélation (40) et une température cible finale dans celle-ci est importante.

17. Réfrigérateur selon l'une quelconque des revendications 13 à 16, dans lequel, lorsque la capacité du compresseur (15) peut varier, le dispositif de commande (64) est adapté pour réduire la capacité du compresseur (15) lorsqu'une différence entre une température réelle dans la chambre de réfrigération (30) et une température cible maximale dans celle-ci est importante, ou lorsqu'une différence entre une température réelle dans la chambre de congélation (40) et une température cible maximale dans celle-ci est importante.

18. Réfrigérateur selon l'une quelconque des revendications 13 à 17, dans lequel le dispositif de commande (64) est adapté pour basculer, au moment où la température dans la chambre de réfrigération (30) ou celle dans la chambre de congélation (40) devient non supérieure à un niveau prédéterminé, de l'opération de commande exécutée à partir d'une condition de non refroidissement à des opérations de commande alternatives habituelles.

19. Réfrigérateur selon l'une quelconque des revendications 13 à 18, dans lequel le dispositif de commande (64) est adapté pour ne pas exécuter, lorsque la température dans la chambre de réfrigération (30) ou la température dans la chambre de congélation (40) est inférieure à un niveau prédéterminé, ou lorsque la température de l'air extérieur est inférieure à un niveau prédéterminé, l'opération de commande à exécuter à partir de la condition de non refroidissement.

20. Réfrigérateur selon l'une quelconque des revendications 13 à 19, dans lequel le dispositif de commande (64) est adapté pour ne pas exécuter une opération de production de glace, une opération de dégivrage et une opération de refroidissement rapide au cours de l'opération de commande exécutée à partir de la condition de non refroidissement, mais pour exécuter les mêmes opérations après que l'opération de commande exécutée à partir de la condition de non refroidissement a été basculée vers les opérations de refroidissement alternatives habituelles.

21. Réfrigérateur selon l'une quelconque des revendications 1 à 6 ou 13 à 20, dans lequel un fluide frigorigène utilisé pour le cycle de réfrigération est un fluide frigorigène inflammable.

22. Procédé destiné à commander un réfrigérateur selon la revendication 7, dans lequel
le procédé comprend les étapes consistant à exécuter une opération de refroidissement en mode congélation au moment de l'excitation d'une source d'alimentation, et par la suite basculer alternativement entre le mode congélation et un mode réfrigération chaque fois que les températures dans la chambre de congélation et la chambre de réfrigération diminuent jusqu'à des niveaux prédéterminés,
une opération de commande dans ce cas étant exécutée à partir d'une condition de non refroidissement qui s'achève lorsque la température dans la chambre de réfrigération est supérieure à celle dans la chambre de congélation.

23. Procédé destiné à commander un réfrigérateur selon la revendication 7, dans lequel
le procédé comprend les étapes consistant à exécuter une opération de refroidissement en mode congélation au moment de l'excitation d'une source d'alimentation, et par la suite basculer alternativement entre le mode congélation et le mode réfrigération chaque fois qu'une période de temps prédéterminée s'est écoulée,
l'opération de commande dans ce cas étant exécutée à partir d'une condition de non refroidissement qui s'achève lorsque la température dans la chambre de réfrigération (30) est supérieure à celle dans la chambre de congélation (40).

24. Procédé destiné à commander un réfrigérateur selon les revendications 22 et 23, dans lequel, lorsqu'un ventilateur (11) destiné à refroidir la chambre de réfrigération (30) et un ventilateur (13) destiné à refroidir la chambre de congélation (40) sont prévus, le ventilateur (11) destiné à refroidir la chambre de réfrigérateur (30) ou le ventilateur (13) destiné à refroidir la chambre de congélation (40) est mis en rotation à une faible fréquence de rotation lorsqu'une différence entre une température réelle dans la chambre de réfrigération (30) et une température cible finale dans celle-ci est importante, ou lorsqu'une différence entre une température réelle dans la chambre de congélation (40) et une température cible finale dans celle-ci est importante.

25. Procédé destiné à commander un réfrigérateur selon l'une quelconque des revendications 22 à 24, dans lequel, lorsque des ventilateurs de condenseur sont prévus, les ventilateurs de condenseur sont mis en rotation à une fréquence de rotation accrue ou une fréquence de rotation maximale lorsqu'une différence entre une température réelle dans la chambre de réfrigération (30) et une température cible finale dans celle-ci est importante, ou lorsqu'une différence entre une température réelle dans la chambre de congélation (40) et une température cible finale dans celle-ci est importante.

26. Procédé destiné à commander un réfrigérateur selon l'une quelconque des revendications 22 à 25, dans lequel, lorsque l'on peut faire varier la capacité du compresseur (15), la capacité du compresseur (15) est réduite lorsqu'une différence entre une température réelle dans la chambre de réfrigération (30) et une température cible maximale dans celle-ci est importante, ou lorsqu'une différence entre une température réelle dans la chambre de congélation (40) et une température cible maximale dans celle-ci est importante.

27. Procédé destiné à commander un réfrigérateur selon l'une quelconque des revendications 22 à 26, dans lequel on fait basculer l'opération de commande exécutée à partir d'une condition de non refroidissement vers des opérations de commande alternatives habituelles au moment où la température dans la chambre de réfrigération (30) ou celle dans la chambre de congélation (40) devient non supérieure à un niveau prédéterminé.

28. Procédé destiné à commander un réfrigérateur selon l'une quelconque des revendications 22 à 27, dans lequel l'opération de commande à exécuter à partir de la condition de non refroidissement n'est pas exécutée lorsque la température dans la chambre de réfrigération (30) ou la température dans la chambre de congélation (40) est inférieure à un niveau prédéterminé, ou lorsque la température de l'air extérieur est inférieure à un niveau prédéterminé.

29. Procédé destiné à commander un réfrigérateur selon l'une quelconque des revendications 22 à 28, dans lequel une opération de production de glace, une opération de dégivrage et une opération de refroidissement rapide ne sont pas exécutées pendant l'opération de commande exécutée à partir de la condition de non refroidissement mais sont exécutées après que l'opération de commande exécutée à partir de l'opération de non refroidissement a été basculée vers les opérations de refroidissement alternatives habituelles.

30. Procédé destiné à commander un réfrigérateur selon l'une quelconque des revendications 7 à 12 ou 22 à 29, dans lequel le fluide frigorigène utilisé pour le cycle de congélation est un fluide frigorigène inflammable.
